# EUROPÄISCHE PATENTSCHRIFT

(11) **EP 3 132 137 B1**
(45) Veröffentlichungstag und Bekanntmachung des Hinweises auf die Patenterteilung: **15.08.2018**
(21) Anmeldenummer: 15715745.4
(22) Anmeldetag: 14.04.2015
(51) Int. Cl.: B66C 23/18, F03D 13/10

(54) **MOBILE KRANVORRICHTUNG SOWIE VERFAHREN ZUR TEMPORÄREN MONTAGE EINER SOLCHEN KRANVORRICHTUNG**
MOBILE CRANE DEVICE AND METHOD FOR THE TEMPORARY ASSEMBLY OF SUCH A CRANE DEVICE
SYSTÈME DE GRUE MOBILE ET PROCÉDÉ DE MONTAGE TEMPORAIRE DUDIT SYSTÈME DE GRUE

(30) Priorität: 15.04.2014 DE 102014105356
(43) Veröffentlichungstag der Anmeldung: 22.02.2017
(73) Patentinhaber: x-Tower Constructions GmbH, 80469 München (DE)
(72) Erfinder: WAGNER, Philipp, 97638 Mellrichstadt (DE)
(74) Vertreter: Prinz & Partner mbB
(86) Internationale Anmeldenummer: PCT/EP2015/058074
(87) Internationale Veröffentlichungsnummer: WO 2015/158713

(56) Entgegenhaltungen:
- EP-A1- 2 041 429
- DE-A1- 19 647 515
- DE-A1- 19 741 988
- US-A1- 2013 098 859

## Beschreibung

Die Erfindung betrifft eine mobile Kranvorrichtung sowie ein Verfahren zur temporären Montage dieser mobilen Kranvorrichtung an einem bestehenden Turmbauwerk einer Windenergieanlage.

Windenergieanlagen unterschiedlicher Größe, Leistung und unterschiedlichen Typs verbreiten sich mehr und mehr, um elektrische Energie aus der kinetischen Energie des Windes zu erzeugen. Die Effektivität einer solchen Windenergieanlage hängt unter anderem davon ab, dass der Wind möglichst lange und gleichmäßig über das Jahr verteilt vorhanden ist.

Die erfindungsgemäße Kranvorrichtung sowie das erfindungsgemäße Montageverfahren eignen sich insbesondere für Windenergieanlagen mit horizontaler Rotorachse, die ein Turmbauwerk sowie an einer Spitze des Turmbauwerks angebrachte, sehr schwere Großkomponenten wie eine Gondel, einen elektrischen Generator, einen Rotor mit wenigstens einem Rotorblatt und unter Umständen ein Getriebe für den Rotor aufweisen.

Es ist bekannt, dass Windenergieanlagen umso höhere Erträge aus dem über das Jahr verteilten Windangebot schöpfen können, je höher die Windenergieanlagen gebaut werden, da in größeren Höhen der Wind im Durchschnitt schneller und laminarer weht.

In den vergangenen Jahren geht aufgrund von Wirtschaftlichkeitsüberlegungen der Trend zu immer größeren Windenergieanlagen, wobei hier der weitverbreitete Anlagentyp mit mehrblättrigem, horizontalachsigem Rotor auf einem Turmbauwerk weiterhin das größte Marktpotenzial aufweist. Das Problem dieses Windenergieanlagentyps besteht vor allem darin, dass seine Großkomponenten bei zunehmender Nabenhöhe mitwachsen und sich damit die Montage, Demontage und vor allem die Wartung solcher Groß-Anlagen mit Nabenhöhen ab 140 m zu entscheidenden Faktoren für die Wirtschaftlichkeit entwickeln.

In jüngster Vergangenheit wurden verschiedene Turmtypen erprobt, um die Nabenhöhe anzuheben und den Rotor in die windertragreicheren höheren Luftschichten zu bringen. Hierbei ist insbesondere der Hybridturm zu nennen, mit einem Betonschaft und einem aufgesetzten Stahlmast, auf dem wiederum die Gondel der Windenergieanlage sitzt.

Das Errichten solcher Windenergieanlagen erfolgt normalerweise in Windparks unter Verwendung von mobilen Groß-Kränen. Die derzeit höchsten Kräne sind Raupenkräne, mit deren Hilfe die Großkomponenten auf Nabenhöhen von 140 m und mehr angehoben werden.

Die Tagesmieten solcher Groß-Kräne sind immens, unabhängig davon, dass nur wenige dieser Spezialgeräte in den einzelnen Ländern zur Verfügung stehen und diese durch dichte Einsatzpläne stark gebucht sind. Allein der Aufbau eines großen Raupenkrans dauert mehrere Tage. Kräne mit 150 t Hublast, die bis 140 m reichen, haben Aufbauzeiten von etwa drei Tagen.

Tagesmieten von 10.000 Euro und mehr sind dabei keine Seltenheit. Ferner können diese Groß-Kräne auch nur bei allenfalls geringem Wind arbeiten, sodass es naturgemäß zu Verzögerungen auf der Baustelle kommt, sobald das Wetter nicht optimal ist.

Für die Wartung oder Reparatur der Windenergieanlagen, insbesondere bei Defekten an den Großkomponenten, müssen die Groß-Kräne kurzfristig angemietet werden, was jedoch oft wegen der geringen Stückzahl gar nicht möglich ist. Darüber hinaus müssen die Wege zu den Windenergieanlagen und die Flächen um die Windenergieanlagen stets für diese Groß-Kräne instand gehalten werden bzw. gerodet bleiben, um überhaupt einen kurzfristigen Reparatureinsatz mit Groß-Kränen zu ermöglichen.

Um den Einsatz der teuren Groß-Kräne zu vermeiden, wurden in der Vergangenheit beim Errichten von Turmbauwerken für Windenergieanlagen auch mitwachsende Turmdrehkräne eingesetzt. Diese Kräne können theoretisch unbegrenzt hoch bauen und sind relativ leistungsfähig mit einer maximalen Last auf dem Kragarm von über 1000 Metertonnen. Da auch sie über die gesamte Bauzeit eine sehr hohe Leistungsfähigkeit vorhalten, sind die anfallenden Mietkosten jedoch ebenfalls enorm. Mit solchen mitwachsenden, großen Turmdrehkränen werden das Turmbauwerk errichtet und die Großkomponenten auf die Turmkrone aufgesetzt. Im Wartungsfall ist der gesamte Turmdrehkran erneut zu ordern und aufzustellen, bevor er eingesetzt werden kann.

Um die Reparatur der Großkomponenten schnell realisieren zu können, wurde auch bereits vorgeschlagen, permanent einen Kran an der Turmkrone zu installieren, mit dem dann die Großkomponenten getauscht werden können. Dieser Vorschlag konnte sich bislang nicht durchsetzen, da die Kosten für solch einen hochmotorisierten und leistungsstarken Kran im Verhältnis zur Zahl seiner Einsätze zu hoch sind.

Ferner ist in der DE 197 41 988 A1 bereits ein fahrbarer Kran zum Aufbau von Windkraftanlagen beschrieben, der entlang des Turmbauwerks nach oben fährt, Großkomponenten der Windenergieanlage zur Spitze des Turmbauwerks fördern kann und anschließend wieder zum Boden abgelassen wird. Verglichen mit herkömmlich verwendeten, mobilen Raupengittermastkränen oder mitwachsenden Turmdrehkränen baut der vorgeschlagene, fahrbare Kran sehr kompakt und lässt sich erheblich schneller auf- und abbauen. Gleichwohl weist der beschriebene Kran aufgrund der mitzuführenden Winden und Antriebsmotoren für die Winden sowie eines komplexen, das Turmbauwerk umgreifenden Hydraulikfahrwerks ein enormes Gewicht auf. Das Kranfahrwerk ist raupenartig aus Längslenkern, Laufrollen und Laufbändern aufgebaut und umfasst darüber hinaus das Turmbauwerk umgreifende Stützrollenhalterungen mit entsprechenden Stützrollen sowie ein Hydrauliksystem mit Hydraulikzylindern zum Anpressen des Fahrwerks an die Oberfläche des Turmbauwerks. Ferner werden insbesondere beim Heben von Großkomponenten der Windenergieanlagen auftretende Biegemomente ausschließlich über das Kranfahrwerk vergleichsweise konzentriert in das Turmbauwerk eingeleitet. Das Kranfahrwerk muss entsprechend robust und massiv ausgebildet sein, wodurch sich das Eigengewicht des Krans weiter erhöht. Darüber hinaus muss auch das Turmbauwerk für die auftretenden Vertikallasten, bestehend aus den zu hebenden Großkomponenten der Windenergieanlage sowie dem enormen Kraneigengewicht, und die extreme Momentenbeanspruchung durch das Kranfahrwerk ausgelegt sein, was bei Bestandsanlagen regelmäßig nicht der Fall sein dürfte. Bei Neubauten können entsprechende Lastfälle selbstverständlich berücksichtigt werden, wobei notwendige Versteifungs- bzw. Stabilisierungsmaßnahmen natürlich zu Mehrkosten führen.

In der WO 2011/134477 A1 ist ebenfalls ein Kran zum Aufbau und zur Wartung von Windkraftanlagen offenbart, der entlang des Turmbauwerks nach oben fährt, Komponenten der Windenergieanlage zur Turmkrone fördern kann und anschließend selbst wieder zum Boden abgelassen wird. Am oberen Ende des Krans ist ein Fahrwerk angeordnet, über das sich der Kran am Turmbauwerk abstützt. Um den Kran während seines Transports entlang des Turmbauwerks zu stabilisieren und in seiner vertikalen Transportposition zu halten, ist am unteren Ende des Krans außerdem ein flexibler Gurt vorgesehen, der das Turmbauwerk lose umschlingt und entlang des Turmbauwerks gleiten kann, wobei der Krantransport nach oben oder unten durch den Gurt in jedem Fall behindert wird. Die Umschlingung des Gurts darf im Übrigen auch nicht zu lose sein, um die gewünschte Transportstabilisierung des Krans zuverlässig zu gewährleisten. Der beschriebene Krantransport entlang des Turmbauwerks ist daher insbesondere bei konischen Turmbauwerken schwierig.

Daher ist es Aufgabe der vorliegenden Erfindung, eine kompakte, mobile Kranvorrichtung zur temporären Montage an einem bestehenden Turmbauwerk einer Windenergieanlage zu schaffen, welche konstruktiv einfach aufgebaut ist, die Beanspruchungen des Turmbauwerks während der Montage, Demontage und des Betriebs der Kranvorrichtung minimiert sowie ausgehend von üblicherweise im Turmbauwerk permanent installierten Leichtlast-Hebezeugen einfach und schnell montierbar bzw. demontierbar ist. Erfindungsgemäß wird diese Aufgabe gelöst durch eine mobile Kranvorrichtung zur temporären Montage an einem bestehenden Turmbauwerk einer Windenergieanlage, mit einem Kranturm, der eine Längsachse aufweist, welche in einem Montagezustand der Kranvorrichtung am Turmbauwerk zur Vertikalrichtung geneigt ist und sich in einem am Turmbauwerk montierten Betriebszustand der Kranvorrichtung im Wesentlichen vertikal erstreckt, einem am Kranturm schwenkbar befestigten Ausleger, der im Montagezustand der Kranvorrichtung nach unten geklappt ist, einem Kranfahrwerk, das im Montagezustand der Kranvorrichtung seitlich vom Kranturm zum Turmbauwerk hin absteht und Kontaktmittel hat, mit denen die Kranvorrichtung sich am Turmbauwerk abstützt und entlang von diesem vertikal verfahrbar ist, sowie einer am Kranturm ausgebildeten Kranaufhängung zur Anbringung eines am Turmbauwerk zu lagernden Kranseils zum vertikalen Verfahren der Kranvorrichtung, wobei die Kranaufhängung einen Kraftangriffspunkt für das Kranseil definiert, der im Montagezustand der Kranvorrichtung in vertikaler Draufsicht radial zwischen den Kontaktmitteln, genauer gesagt den Kontaktstellen am Turm, und dem Schwerpunkt der Kranvorrichtung angeordnet ist, wobei der Kranturm im Montagezustand der Kranvorrichtung über das Kranfahrwerk frei schwenkbar zum Turmbauwerk ist.

Vorzugsweise ist der Kranturm im Montagezustand der Kranvorrichtung über das Kranfahrwerk um einen Winkel von wenigstens 4° zum Turmbauwerk frei schwenkbar. Dieser Winkel stellt sich abhängig von der Lage des Kraftangriffspunkts, des Schwerpunkts der Kranvorrichtung und des Kontaktbereich zwischen dem Kranfahrwerk und dem Turmbauwerk relativ zueinander ein und kann sich während der Montage der Kranvorrichtung ändern, insbesondere bei konisch ausgeführten Turmbauwerken.

Ferner wird die im Montagezustand der Kranvorrichtung um wenigstens 4° zur Vertikalen geneigte Längsachse des Kranturms bei der Überführung der Kranvorrichtung in den Betriebszustand so verschwenkt, dass sie sich im Betriebszustand im Wesentlichen vertikal erstreckt. Mit anderen Worten ändert sich zwischen dem Montagezustand und dem Betriebszustand der Kranvorrichtung die Neigung des Kranturms zur Vertikalen.

Die Begriffe "oben" und "unten" beziehen sich auf den vertikal aufgestellten Zustand der Kranvorrichtung.Aufgrund der Position des Kraftangriffspunkts für das Kranseil sowie des über das Kranfahrwerk frei schwenkbaren Kranturms lässt sich die Kranvorrichtung nach Art einer Schubkarre entlang einer Oberfläche des Turmbauwerks bewegen, wobei beim Hoch- und Runterfahren der Kranvorrichtung am Turmbauwerk der Kontakt mit dem Turmbauwerk nur am unteren Ende des Kranturms stattfindet und entsprechend nur im unteren Bereich des Kranturms (insbesondere im vertikal unteren Drittel) Kontaktmittel vorhanden sind. Nur im Bereich des unteren Endes des Kranturms ist folglich zumindest ein Kranfahrwerk vorhanden, im oberen Bereich des Kranturms ist vorzugsweise weder ein Kranfahrwerk, noch ein anderes Kontaktmittel zum Kontaktieren des Turmbauwerks vorhanden, weil die die Kranvorrichtung beim Hochfahren und Runterfahren nach außen, weg vom Turmbauwerk, gekippt ist. Den Vergleich mit einer Schubkarre fortsetzend würde der Kranturm eine vertikal nach oben gezogene Schubkarre symbolisieren, die nach außen gekippt ist, so dass beim Hochziehen nur das Rad das Turmbauwerk kontaktiert, weil der Schwerpunkt weiter weg vom Turmbauwerk liegt als der Kraftangriffspunkt des Zugseils. Somit ist die Kranvorrichtung trotz ihrer freien Schwenkbarkeit beim Hochfahren stabil. Das Eigengewicht der Kranvorrichtung erzeugt nämlich ein Moment, welches das Kranfahrwerk gegen die Oberfläche des Turmbauwerks beaufschlagt und dabei den Kranturm so verschwenkt, dass die Längsachse des Kranturms zur Vertikalrichtung geneigt ist. Erst bei Erreichen einer Endmontagestellung der mobilen Kranvorrichtung wird der Kranturm dann so ausgerichtet, dass sich dessen Längsachse im Wesentlichen vertikal erstreckt. Gegenüber dem Stand der Technik ist das Eigengewicht der mobilen Kranvorrichtung aufgrund der erheblich vereinfachten Fahrwerkskonstruktion deutlich verringert, sodass sich die Beanspruchung des Turmbauwerks reduziert. Aufgrund ihrer vereinfachten Konstruktion lassen sich im Übrigen auch der Fertigungsaufwand und damit die Herstellungskosten für die mobile Kranvorrichtung reduzieren. Ein Biegemoment wird aufgrund des Schubkarrenprinzips beim Hochfahren nicht auf den Turm ausgeübt.

Bevorzugt weist das Kranfahrwerk zwei in Umfangsrichtung beabstandete Kontaktmittel zur Abstützung am Turmbauwerk auf, wobei der Kraftangriffspunkt der Kranaufhängung in Umfangsrichtung im Wesentlichen mittig zwischen den beiden Kontaktmitteln angeordnet ist. Eine solche Konstruktion des Kranfahrwerks stabilisiert die Kranvorrichtung tangential zur Oberfläche des Turmbauwerks und gewährleistet einen kippsicheren Transport der Kranvorrichtung entlang des Turmbauwerks.

Vorzugsweise sind die Kontaktmittel Stützräder, welche an der Oberfläche des Turmbauwerks entlang rollen können. Derartige Stützräder weisen lediglich einen minimalen Rollwiderstand beim Transport der Kranvorrichtung entlang des Turmbauwerks auf und hinterlassen bei geeigneter Materialwahl und Sauberkeit keine oder allenfalls minimale Spuren an der Turmoberfläche.

In einer Ausführungsform der Kranvorrichtung weist das Kranfahrwerk, insbesondere im Bereich der Kontaktmittel, eine Arretiereinrichtung zum Fixieren der Kranvorrichtung am Turmbauwerk auf. Da im Montagezustand der Kranvorrichtung radial vom Turmschaft weg vorzugsweise kein Formschluss mit dem Turmbauwerk vorhanden ist, verhindert diese Arretiereinrichtung, dass sich das Kranfahrwerk in einem Betriebszustand der Kranvorrichtung radial vom Turmbauwerk entfernt.

In einer weiteren Ausführungsform der Kranvorrichtung weist der Kranturm in axialer Richtung lediglich genau ein Kranfahrwerk auf, welches im Montagezustand der Kranvorrichtung unterhalb des Schwerpunkts der Kranvorrichtung an einem unteren Ende des Kranturms angeordnet ist. Dies führt zu einer besonders einfachen Konstruktion der Kranvorrichtung und stellt darüber hinaus mit geringem Aufwand eine freie Schwenkbarkeit des Kranturms sicher.

Vorzugsweise sind alle Kontaktmittel des Kranfahrwerks innerhalb eines Kontaktbereichs angeordnet, dessen axiale Abmessung maximal 10%, insbesondere maximal 5% der axialen Abmessung des Kranturms im Montagezustand entspricht. Dieser in Axialrichtung sehr kurze Kontaktbereich des Kranfahrwerks wirkt sich ebenfalls positiv auf die freie Schwenkbarkeit des Kranturms relativ zum Turmbauwerk aus und trägt damit zum gewünschten Krantransport nach Art einer Schubkarre bei.

Das Kranfahrwerk der Kranvorrichtung ist bevorzugt ein einseitiges Fahrwerk, welches im Montagezustand der Kranvorrichtung nur an einer Turmumfangshälfte des Turmbauwerks anliegt. Insbesondere ist das Kranfahrwerk kein das Turmbauwerk umgreifendes Fahrwerk mit rückseitigen Kontaktmitteln. Das einseitige Fahrwerk hat ein äußerst geringes Eigengewicht und lässt sich darüber hinaus konstruktiv einfach und preiswert herstellen. Ferner hat sich herausgestellt, dass ein solches Kranfahrwerk für einen sicheren und zuverlässigen Transport der Kranvorrichtung entlang des Turmbauwerks ausreicht, wenn der Transport der Kranvorrichtung, wie oben beschrieben, nach Art einer Schubkarre erfolgt.

Insbesondere kann das Kranfahrwerk lenkbar sein, um ein seitliches, das heißt tangentiales Driften der Kranvorrichtung am Turmbauwerk (zum Beispiel infolge Seitenwind) ausgleichen zu können und eine gewünschte Endmontageposition im Bereich der Spitze des Turmbauwerks präzise und zuverlässig zu erreichen.

In einer weiteren Ausführungsform der Kranvorrichtung ist der Kranturm in Richtung seiner Längsachse teleskopierbar. Auf diese Weise lässt sich mit geringem Aufwand die axiale Abmessung des Kranturms in einem Transportzustand der Kranvorrichtung auf einem Spezialtieflader minimieren und in einem Betriebszustand der Kranvorrichtung maximieren, um die Momentenbeanspruchung des Turmbauwerks gering zu halten.

In einer weiteren Ausführungsform der Kranvorrichtung ist am Kranturm eine Befestigungseinrichtung zum Fixieren der Kranvorrichtung am Turmbauwerk vorgesehen, wobei die Befestigungseinrichtung seitlich vom Kranturm absteht. Insbesondere ist die Befestigungseinrichtung im Montagezustand der Kranvorrichtung zunächst vom Turmbauwerk beabstandet und erst in der Endmontageposition bzw. im Betriebszustand der Kranvorrichtung mit dem Turmbauwerk verbunden. Um die Beanspruchung des Turmbauwerks zu minimieren, wird ein axialer Abstand zwischen der Befestigungseinrichtung und einer am Kranfahrwerk vorgesehenen Arretiereinrichtung möglichst groß gewählt und beträgt vorzugsweise mehr als 10 m, insbesondere mehr als 15 m. Analog zur Arretiereinrichtung wird die Kranvorrichtung auch durch die Befestigungseinrichtung in radialer und tangentialer Richtung am Turmbauwerk fixiert. Ferner werden die auftretenden Vertikalkräfte, das heißt das Eigengewicht der Kranvorrichtung sowie gegebenenfalls das Gewicht einer zu hebenden Großkomponente der Windenergieanlage, im Wesentlichen über die Befestigungseinrichtung in das Turmbauwerk eingeleitet.

Bevorzugt weist die Befestigungseinrichtung hierbei zwei in Umfangsrichtung beabstandete Befestigungsarme zum Fixieren der Kranvorrichtung am Turmbauwerk auf, wobei der Kraftangriffspunkt der Kranaufhängung in Umfangsrichtung im Wesentlichen mittig zwischen den beiden Befestigungsarmen angeordnet ist.

Besonders bevorzugt ist die Kranaufhängung in axialer Richtung näher an der Befestigungseinrichtung als am Kranfahrwerk angeordnet, wobei die Kranaufhängung sogar in die Befestigungseinrichtung integriert sein kann. Insbesondere ist die Kranaufhängung im Montagezustand der Kranvorrichtung oberhalb des Schwerpunkts der Kranvorrichtung angeordnet, sodass sich die Kranvorrichtung beim Transport entlang des Turmbauwerks in einer stabilen Lage befindet. Darüber hinaus werden durch eine solche Positionierung der Kranaufhängung unerwünscht hohe Anpresskräfte zwischen dem Kranfahrwerk und der Oberfläche des Turmbauwerks verhindert.

In einer weiteren Ausführungsform der Kranvorrichtung umfasst der Kranturm im Montagezustand der Kranvorrichtung einen unteren Turmabschnitt und einen daran angrenzenden, oberen Turmabschnitt, der gegenüber dem unteren Turmabschnitt um die Längsachse drehbar ist, wobei der untere Turmabschnitt das Fahrwerk, die Kranaufhängung und eine Befestigungseinrichtung zum Fixieren der Kranvorrichtung am Turmbauwerk aufweist. Die mobile Kranvorrichtung ist somit als schwenkbarer Kran ausgebildet und weist einen entsprechend großen Aktionsradius auf.

In einer weiteren Ausführungsform der Kranvorrichtung ist eine Lastenunterflasche vorgesehen, welche im Montagezustand der Kranvorrichtung frei hängend an einem Lastseil angeordnet ist. Für den bevorzugten Fall, dass die Winden für das Kranseil sowie für das Lastseil jeweils am Boden verbleiben, ist durch die frei hängende Lastenunterflasche sichergestellt, dass das Lastseil beim Bewegen der Kranvorrichtung mittels Kranseil und Kranwinde nicht übermäßig gespannt wird, aber auch nicht schlaff fällt. Abstimmungstoleranzen bei der Drehzahlsteuerung der beiden Winden können durch eine Relativbewegung zwischen der Lastenunterflasche und dem Kranturm kompensiert werden, sodass eine aufwendig zu realisierende, exakte Abstimmung der Windensteuerungen nicht notwendig ist.

Im Übrigen kann die Kranvorrichtung mit oder ohne eine das Turmbauwerk umgreifende Halteeinrichtung ausgebildet sein. Ist das Turmbauwerk im Bereich der Turmkrone zum Beispiel aus Beton hergestellt, so ist üblicherweise keine umgreifende Halteeinrichtung notwendig, da sich die Kranvorrichtung im Beton verankern lässt. Ist das Turmbauwerk hingegen im Bereich der Turmkrone als Stahlmast ausgebildet, so empfiehlt sich zumindest im Betriebszustand der Kranvorrichtung eine den Turmschaft des Turmbauwerks umgreifende Halteeinrichtung, um die Stahlschale des Turmbauwerks nicht durch Verankerungsöffnungen für die Kranvorrichtung zu schwächen.

Wenn das Turmbauwerk zwischen seinen beiden vertikalen Enden seitlich schräg zum Boden verlaufende Abspannseile aufweist, ist es von Vorteil, wenn die Kranvorrichtung zwei in Längsrichtung des Kranturms hintereinander angeordnete Kranfahrwerke aufweist. Diese Fahrwerke sind voneinander unabhängig ausfahrbare Kranfahrwerke. Wenn das vertikal untere Kranfahrwerk zu dem Abspannpunkt und zu den entsprechenden oberen Enden der Abspannseile gelangt ist, kann die Kranvorrichtung nicht weiterfahren, weil dann das untere Kranfahrwerk auf die entsprechenden Seile auffahren würde. Somit wird das vertikal obere Kranfahrwerk ausgefahren und das vertikal untere Kranfahrwerk eingefahren. Das vertikal obere Kranfahrwerk hatte zuvor jedoch, während es eingefahren war, das obere Ende der Abspannseile und den oberen Abspannpunkt überfahren. Die Last der Kranvorrichtung wird durch Ausfahren des oberen Kranfahrwerks und Einfahren des unteren Kranfahrwerks auf das obere Kranfahrwerke übertragen. Somit steigt sozusagen die Kranvorrichtung auf diese Weise über den Abspannpunkt und die oberen Enden der im Wege stehenden Abspannseile. Von den beiden Fahrwerken ist während der Hoch- und Runterfahrens der Kranvorrichtung am Turmbauwerk nur immer eines in Kontakt mit dem Turmbauwerk. Die Fahrwerke sind im Bereich des unteren Endes (im unteren Drittel) des Kranturms angeordnet, und sind die einzigen Fahrwerke, d.h. es ist kein Fahrwerk oberhalb (in den oberen zwei Dritteln) vorhanden.

Wichtig ist es, dass die Kranvorrichtung während des Hochziehens zur Spitze des Turmbauwerks aufgrund ihres Eigengewichts immer nach außen gekippt ist. Nur dadurch ist gewährleistet, dass am oberen Ende kein Kranfahrwerk vorhanden sein muss und es ausreicht, am unteren Ende des Kranturms zumindest ein Fahrwerk vorzusehen. Um dies zu gewährleisten, kann es von Vorteil sein, die Kranaufhängung in Längsrichtung und/oder Querrichtung des Kranturms, bezogen auf den Zustand während des Hochfahrens der Kranvorrichtung, verstellbar am Kranturm zu lagern. Durch diese Verstellbarkeit lässt sich nicht nur die Position der Kranaufhängung relativ zur Kranvorrichtung, sondern auch die Lage der Kranaufhängung relativ zum Schwerpunkt der Kranvorrichtung einstellen und verstellen.

Beim Hochziehen der Kranvorrichtung auf die Spitze des Turmbauwerks ist die Kranvorrichtung mit ihrem oberen Ende nach außen gekippt. Eine mechanische Arretiervorrichtung kann in diesem Fall sinnvoll sein, um den Ausleger, welcher beim Hochfahren an den Kranturm herangeschwenkt ist (eingeklappter Zustand der Kranvorrichtung), formschlüssig am Kranturm zu halten. Gemäß einer Ausführungsform der Erfindung ist eine sichelförmige, schwenkbare Arretiervorrichtung beispielsweise am Kranturm vorhanden, die nach außen zum Ausleger schwenkt, um ihn mechanisch an den Kranturm anzukoppeln.

Eine Ausführung der Erfindung sieht vor, dass der Ausleger ein in seiner Längsrichtung ausfahrbarer und damit längenverstellbarer Ausleger ist. Dies kann beispielsweise durch einen teleskopierbaren Ausleger realisiert werden. Durch einen solchen ausfahrbaren Ausleger ist es möglich, extrem lange Rotorblätter zur Spitze des Turmbauwerks zu befördern.

Die eingangs genannte Aufgabe wird im Übrigen auch gelöst durch ein Verfahren zur temporären Montage einer oben genannten Kranvorrichtung an einem bestehenden Turmbauwerk einer Windenergieanlage, wobei das Turmbauwerk eine Pilotwinde mit Pilotseil sowie im Bereich einer Turmkrone einen radial abstehenden Hilfskragarm, einen radial abstehenden Hauptkragarm und mehrere Kranlager aufweist, wobei das Verfahren folgende Schritte umfasst:
a) Die mobile Kranvorrichtung wird von einem liegenden Transportzustand in einen stehenden Montagezustand am Turmbauwerk überführt;
b) eine Pilotflasche mit einem Rüstseil wird von der Pilotwinde am Turmbauwerk hochgezogen;
c) die Pilotflasche wird an einem freien Ende des Hilfskragarms befestigt;
d) eine Rüstflasche mit einem Kranseil wird von einer am Boden befindlichen Rüstwinde am Turmbauwerk hochgezogen;
e) die Rüstflasche wird an einem freien Ende des Hauptkragarms befestigt;
f) die Kranvorrichtung wird von einer Kranwinde am Turmbauwerk hochgezogen, wobei sich die Kranvorrichtung über das Kranfahrwerk am Turmbauwerk abstützt und das Kranfahrwerk axial auf einer Oberfläche des Turmbauwerks entlang rollt;
g) die Kranvorrichtung wird in einer Endmontageposition an den Kranlagern fixiert und vom Montagezustand in einen Betriebszustand überführt.

Infolge der schrittweisen Traglaststeigerung der Hebezeuge erfordert das beschriebene Montageverfahren kein im Turmbauwerk fest installiertes, teures Spezial-Hebezeug, sondern lediglich eine Pilotwinde oder ein einfaches und preiswertes Leichtlast-Hebezeug, das üblicherweise sowieso im Turmbauwerk vorhanden ist. Gleichzeitig erlaubt das erfindungsgemäße Verfahren eine relativ rasche Montage und Demontage der Kranvorrichtung am bzw. vom Turmbauwerk.

In einer Verfahrensvariante wird die Kranvorrichtung im Schritt a) durch einen Aufrichtezylinder eines Krantransporters aufgerichtet. Somit kann auf einen zusätzlichen, separaten Kran zum Aufstellen der Kranvorrichtung verzichtet werden.

Ferner kann die Kranvorrichtung im Schritt a) mittels eines fahrbaren Transportbocks zum Turmbauwerk bewegt werden.

Die Pilotwinde mit Pilotseil kann fest im Bereich der Turmkrone installiert sein oder vor Schritt b) durch ein im Turmbauwerk fest installiertes Leichtlast-Hebezeug zur Turmkrone transportiert werden. Leichtlast-Hebezeuge sind beispielsweise einfache Kettenzüge oder Lastenaufzüge und zählen zur Grundausstattung herkömmlicher Turmbauwerke für Windenergieanlagen. Sofern im Turmbauwerk also nicht bereits eine Pilotwinde mit Pilotseil vorhanden ist, kann diese durch das Leichtlast-Hebezeug problemlos zur Turmkrone transportiert werden.

Die Rüstflasche ist gemäß einer weiteren Verfahrensvariante auf einer Transporteinheit montiert und wird im Schritt d) so nach oben gezogen, dass die Transporteinheit auf einer Oberfläche des Turmbauwerks entlang rollt oder gleitet. Die Transporteinheit ist insbesondere ein Transportwagen oder -schlitten und dient als Anprallschutz, wenn die Rüstflasche beispielsweise vom Wind erfasst und gegen das Turmbauwerk beaufschlagt wird. Beschädigungen oder optische Beeinträchtigungen des Turmbauwerks lassen sich auf diese Weise einfach und wirkungsvoll verhindern.

Gemäß einer weiteren Verfahrensvariante befinden sich sowohl die Kranwinde zum axialen Bewegen der Kranvorrichtung mittels des Kranseils als auch eine Lastwinde zum axialen Bewegen von Komponenten der Windenergieanlage mittels eines Lastseils am Boden, wobei eine Lastenunterflasche der Kranvorrichtung im Schritt f) frei am Lastseil hängt und über die Lastwinde zusammen mit der Kranvorrichtung hochgezogen wird. Dadurch ist sichergestellt, dass das Lastseil beim Bewegen der Kranvorrichtung mittels Kranseil und Kranwinde nicht übermäßig gespannt wird, aber auch nicht schlaff fällt. Abstimmungstoleranzen bei der Drehzahlsteuerung der beiden Winden werden durch eine Relativbewegung zwischen der Lastenunterflasche und dem Kranturm kompensiert, sodass eine aufwendig zu realisierende, exakte Abstimmung der Windensteuerungen nicht notwendig ist.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 eine schematische Seitenansicht der erfindungsgemäßen Kranvorrichtung in einem Montagezustand;
- Figur 2 eine schematische Seitenansicht der Kranvorrichtung nach Figur 1 in einem Betriebszustand;
- Figur 3 einen schematischen Schnitt durch die Kranvorrichtung gemäß Figur 1;
- Figur 4 einen schematischen Schnitt durch die Kranvorrichtung gemäß Figur 2;
- Figur 5 einen schematischen Schnitt durch eine erfindungsgemäße Kranvorrichtung gemäß einer alternativen Ausführungsform;
- Figur 6 zwei schematische Detailansichten einer erfindungsgemäßen Kranvorrichtung im Bereich eines axialen Endes;
- Figur 7 eine schematische Detailansicht einer im Montagezustand befindlichen erfindungsgemäßen Kranvorrichtung im Bereich eines axialen Endes;
- Figur 8 eine schematische Detailansicht einer im Betriebszustand befindlichen erfindungsgemäßen Kranvorrichtung im Bereich eines axialen Endes;
- Figur 9 eine schematische Detailansicht einer im Montagezustand befindlichen, erfindungsgemäßen Kranvorrichtung im Bereich einer Befestigungseinrichtung;
- Figur 10 eine schematische Detailansicht einer im Betriebszustand befindlichen, erfindungsgemäßen Kranvorrichtung im Bereich einer Befestigungseinrichtung;
- Figuren 11a - c einen schematischen Verfahrensablauf zur Überführung einer erfindungsgemäßen Kranvorrichtung von einem liegenden Transportzustand in einen stehenden Montagezustand am Turmbauwerk;
- Figuren 12a - d einen schematischen Verfahrensablauf zur temporären Montage einer erfindungsgemäßen Kranvorrichtung an einem bestehenden Turmbauwerk einer Windenergieanlage;
- Figur 13 eine schematische Ansicht einer erfindungsgemäßen Kranvorrichtung im Betriebszustand beim Heben einer Gondel;
- Figur 14 eine schematische Ansicht einer erfindungsgemäßen Kranvorrichtung im Betriebszustand beim Heben eines Rotorblatts;
- Figur 15 die schematische Ansicht der Kranvorrichtung gemäß Figur 14 beim Heben eines Rotorblatts gemäß einer alternativen Ausführungsform;
- Figur 16 die schematische Ansicht der Kranvorrichtung gemäß Figur 14 beim Heben eines Rotorblatts gemäß einer weiteren alternativen Ausführungsform,
- Figur 17 eine Seitenansicht einer zweiten Ausführungsform der erfindungsgemäßen Kranvorrichtung, die auf einem Krantransporter in liegendem Zustand angeordnet ist,
- Figur 18 mehrere Stadien beim Aufrichten der Kranvorrichtung nach Figur 17 auf dem Krantransporter,
- Figur 19 die Kranvorrichtung nach Figur 17 beim Hochfahren auf das Turmbauwerk,
- Figuren 20a und 20b die Kranvorrichtung nach Figur 17 beim Hochfahren bzw. Ausschwenken des Auslegers, und
- Figuren 21a und 21b die im Betriebszustand befindliche Kranvorrichtung mit einem eingefahrenen bzw. ausgefahrenen Ausleger.

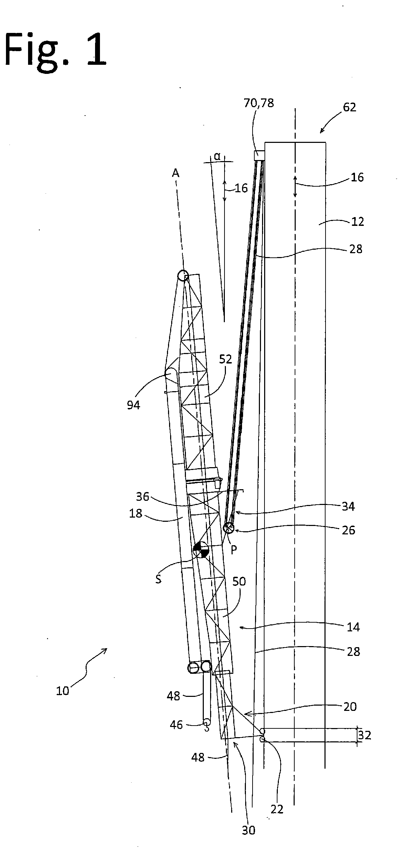

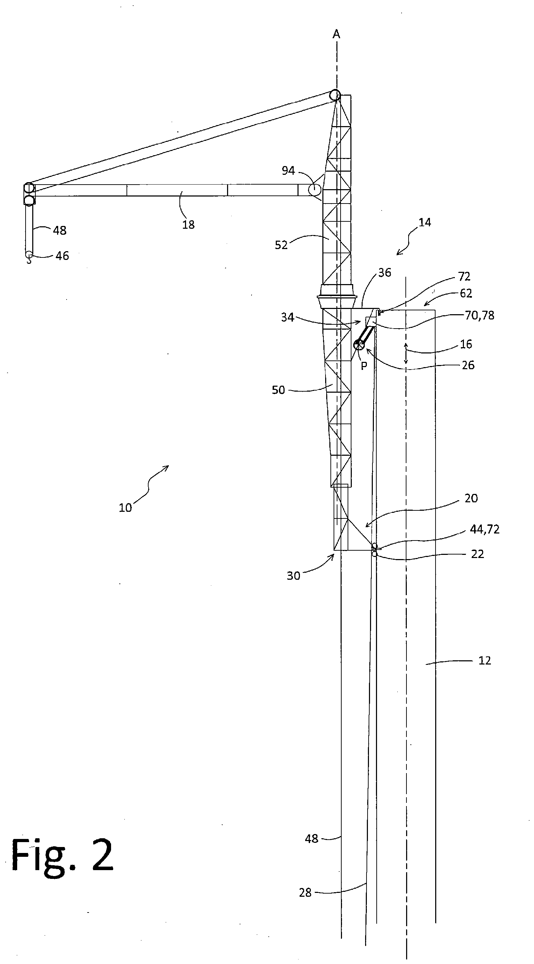

Die Figuren 1 bis 4 zeigen schematische Ansichten und Schnitte einer mobilen Kranvorrichtung 10 zur temporären Montage an einem bestehenden Turmbauwerk 12 einer Windenergieanlage, mit einem Kranturm 14, der eine Längsachse A aufweist, welche in einem Montagezustand der Kranvorrichtung 10 am Turmbauwerk 12 zu einer Vertikalrichtung 16 geneigt ist (Figur 1) und sich in einem am Turmbauwerk 12 montierten Betriebszustand der Kranvorrichtung 10 im Wesentlichen vertikal erstreckt (Figur 2). Ein Neigungswinkel α zwischen der Längsachse A des Kranturms 14 und der Vertikalrichtung 16 beträgt im Montagezustand der Kranvorrichtung 10 gemäß Figur 1 bevorzugt maximal 10°.

Am Kranturm 14 ist ein Ausleger 18, konkret ein Nadelausleger der Kranvorrichtung 10 schwenkbar befestigt, wobei der Ausleger 18 im Montagezustand der Kranvorrichtung 10 nach unten geklappt ist.

Ferner ist ein Kranfahrwerk 20 vorgesehen, das im Montagezustand der Kranvorrichtung 10 seitlich vom Kranturm 14 zum Turmbauwerk 12 hin absteht und Kontaktmittel 22 aufweist, mit denen sich die Kranvorrichtung 10 am Turmbauwerk 12 abstützt. Im dargestellten Ausführungsbeispiel sind die Kontaktmittel 22 als Stützräder ausgebildet, die an einer Oberfläche des Turmbauwerks 12 entlang rollen können, um die Kranvorrichtung 10 entlang des Turmbauwerks 12 vertikal zu verfahren.

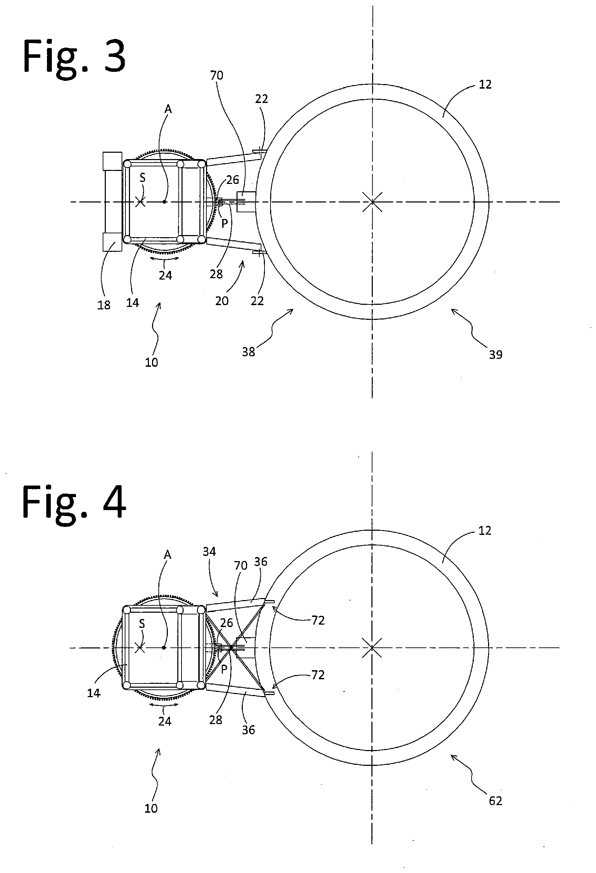

Am Kranturm 14 ist ferner eine Kranaufhängung 26 zur Anbringung eines am Turmbauwerk 12 zu lagernden Kranseils 28 zum vertikalen Verfahren der Kranvorrichtung 10 ausgebildet, wobei die Kranaufhängung 26 einen Kraftangriffspunkt P für das Kranseil 28 definiert. Gemäß Figur 3 ist der Kraftangriffspunkt P im Montagezustand der Kranvorrichtung 10 in vertikaler Draufsicht radial zwischen den Kontaktmitteln 22, konkret einer Kontaktstelle der Kontaktmittel 22 mit einer Oberfläche des Turmbauwerks 12, und dem Schwerpunkt S der Kranvorrichtung 10 angeordnet. Unter dem Kraftangriffspunkt P ist ein idealisierter Aufhängepunkt der Kranvorrichtung 10 am Turmbauwerk 12 zu verstehen, wobei im Falle einer Kranaufhängung in mehreren (gegebenenfalls beabstandeten) Einzelpunkten aus diesen Einzelpunkten ein resultierender, "virtueller" Kraftangriffspunkt P gebildet wird. Besonders bevorzugt gilt dabei auch für alle Einzelpunkte der Kranaufhängung 26, dass sie im Montagezustand der Kranvorrichtung 10 in vertikaler Draufsicht radial zwischen den Kontaktmitteln 22 und dem Schwerpunkt S der Kranvorrichtung 10 angeordnet sind.

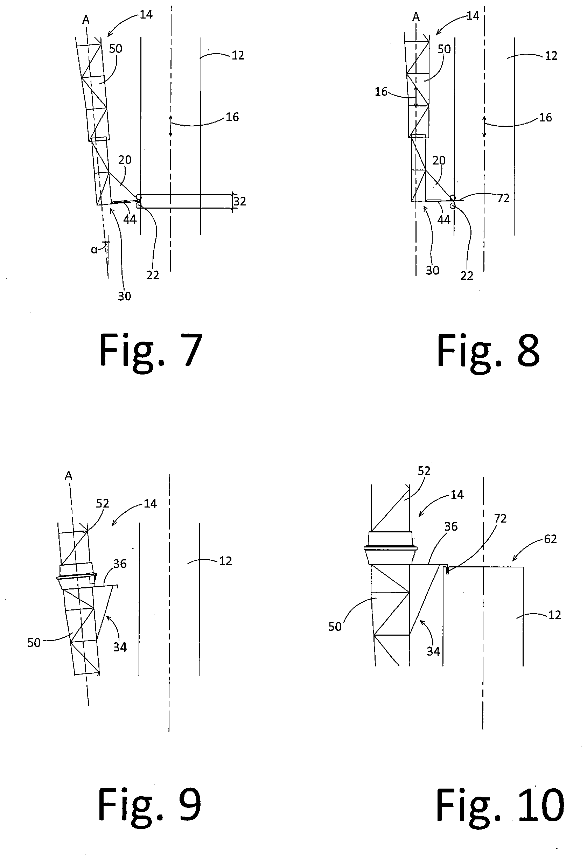

Gemäß den Figuren 1 und 2 weist der Kranturm in axialer Richtung genau ein Kranfahrwerk 20 auf, das im Montagezustand der Kranvorrichtung 10 unterhalb des Schwerpunkts S der Kranvorrichtung 10 an einem unteren Ende 30 des Kranturms 14 angeordnet ist. Dabei sind alle Kontaktmittel 22 des Kranfahrwerks 20 innerhalb eines Kontaktbereichs 32 (siehe auch Figuren 7 und 8) angeordnet, dessen axiale Abmessung maximal 10%, insbesondere maximal 5% der axialen Abmessung des Kranturms 14 entspricht. Dieser axial kurze Kontaktbereich 32 trägt dazu bei, dass der Kranturm 14 im Montagezustand der Kranvorrichtung 10 über das Kranfahrwerk 20 relativ zum Turmbauwerk 12 im Wesentlichen frei verschwenkt werden kann. Über diese freie Schwenkbarkeit stellt sich fortlaufend ein stabiler Gleichgewichtszustand mit einem (veränderlichen) Neigungswinkel α ein, bei dem die Kranvorrichtung 10 sich über das Kranfahrwerk 20 radial am Turmbauwerk 12 abstützt und über die Kranaufhängung 26 in axialer Richtung nach oben gezogen oder nach unten abgelassen wird.

Die Figur 3 zeigt einen schematischen Schnitt durch die Kranvorrichtung 10 im Montagezustand, demzufolge das Kranfahrwerk 20 zwei in Umfangsrichtung 24 beabstandete Kontaktmittel 22 zur Abstützung am Turmbauwerk 12 aufweist, wobei der Kraftangriffspunkt P der Kranaufhängung 26 in Umfangsrichtung 24 im Wesentlichen mittig zwischen den beiden Kontaktmitteln 22 angeordnet ist.

Um bei Seitenwind ein seitliches, das heißt tangentiales Abdriften am Turmbauwerk 12 zu verhindern sowie eine definierte Endmontageposition exakt und zuverlässig zu erreichen, ist das Kranfahrwerk 20 in gewissem Umfang lenkbar.

Die Kontaktmittel 22 sind daher lenkbare Stützräder, mit denen ein durch Seitenwind hervorgerufenes Abdriften kompensiert werden kann. Die Positionsüberwachung der Kranvorrichtung 10 im Montagezustand erfolgt bevorzugt mittels einer Kamera, sodass die Kranvorrichtung 10 im Montagezustand unbemannt ist und dementsprechend geringere Sicherheitsanforderungen erfüllt werden müssen.

Die Figur 4 zeigt einen schematischen Schnitt durch die Kranvorrichtung 10 in deren Betriebszustand gemäß Figur 2, wobei am Kranturm 14 eine seitlich abstehende Befestigungseinrichtung 34 zum Fixieren der Kranvorrichtung 10 am Turmbauwerk 12 vorgesehen ist. Die Befestigungseinrichtung 34 ist im Montagezustand der Kranvorrichtung 10 gemäß Figur 1 zunächst vom Turmbauwerk 12 beabstandet und erst im Betriebszustand gemäß Figur 2, das heißt in der Endmontageposition der Kranvorrichtung 10, mit dem Turmbauwerk 12 verbunden. Gemäß Figur 4 weist die Befestigungseinrichtung 34 zwei in Umfangsrichtung 24 beabstandete Befestigungsarme 36 zum Fixieren der Kranvorrichtung 10 am Turmbauwerk 12 auf, wobei der Kraftangriffspunkt P der Kranaufhängung 26 in Umfangsrichtung 24 im Wesentlichen mittig zwischen den beiden Befestigungsarmen 36 angeordnet ist.

In axialer Richtung ist die Kranaufhängung 26 näher an der Befestigungseinrichtung 34 als am Kranfahrwerk 20 angeordnet, wobei die Kranaufhängung 26 gemäß den Figuren 1 und 2 sogar insbesondere in die Befestigungseinrichtung 34 integriert sein kann.

Das Kranfahrwerk 20 ist im dargestellten Ausführungsbeispiel ein einseitiges Fahrwerk, welches im Montagezustand der Kranvorrichtung 10 nur an einer Turmumfangshälfte 38 des Turmbauwerks 12 anliegt. Aufgrund der Position des Kraftangriffspunkts P für das Kranseil 28 sowie des über das Kranfahrwerk 20 frei schwenkbaren Kranturms 14 lässt sich die Kranvorrichtung 10 nach Art einer Schubkarre axial entlang der Oberfläche des Turmbauwerks 12 bewegen, wobei das Eigengewicht der Kranvorrichtung 10 ein Moment erzeugt, welches das Kranfahrwerk 20 zuverlässig gegen die Oberfläche des Turmbauwerks 12 beaufschlagt. Somit ist insbesondere kein umgreifendes Fahrwerk mit rückseitigen, das heißt an der anderen Turmumfangshälfte 39 angreifenden Stützelementen nötig.

Im Betriebszustand kann die Kranvorrichtung 10 dann mit oder ohne eine den Turmschaft des Turmbauwerks 12 umgreifende Halteeinrichtung 40 ausgebildet sein.

Ist das Turmbauwerk 12 im Bereich seiner Turmkrone 62 aus Beton hergestellt, so ist gemäß Figur 4 üblicherweise keine umgreifende Halteeinrichtung notwendig, da die Kranvorrichtung 10 problemlos im Beton verankert werden kann.

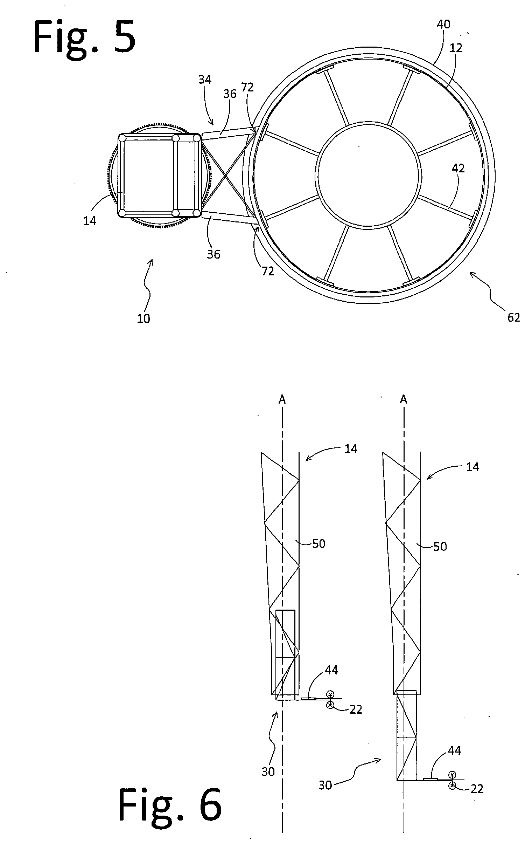

Falls das Turmbauwerk 12 jedoch gemäß Figur 5 im Bereich der Turmkrone 62 als Stahlmast ausgebildet, empfiehlt sich zumindest im Betriebszustand der Kranvorrichtung 10 eine den Turmschaft des Turmbauwerks 12 umgreifende Halteeinrichtung 40, um die Stahlschale des Turmbauwerks 12 nicht durch Verankerungsöffnungen für die Kranvorrichtung 10 zu schwächen. Da das Turmbauwerk 12 im Betriebszustand der Kranvorrichtung 10 in den jeweiligen Verankerungspunkten oder Kranlagern 72 lokal stark beansprucht wird, ist bei einer solchen Stahlausführung der Turmkrone 62 im Bereich der Kranlager 72 zusätzlich eine Aussteifungskonstruktion 42 vorgesehen, um eine unerwünschte radiale Verformung der Stahlbleche des Turmbauwerks 12 einfach und zuverlässig zu verhindern.

Die Aussteifungskonstruktion 42 ist im vorliegenden Ausführungsbeispiel lediglich temporär, das heißt zumindest während der Montage und Demontage sowie während des Betriebs der Kranvorrichtung 10, im Turmbauwerk vorgesehen und daher zur Montagevereinfachung in Leichtbauweise hergestellt, beispielsweise aus Kohlefaser. Gemäß Figur 5 ist die Aussteifungskonstruktion 42 als Speichenrad ausgeführt, welches an den Kranlagern 72 eingeleitete Radialkräfte aufnehmen und über den Umfang des Turmbauwerks 12 verteilen kann, sodass eine unerwünschte radiale Verformung der dünnen Stahlschale verhindert wird.

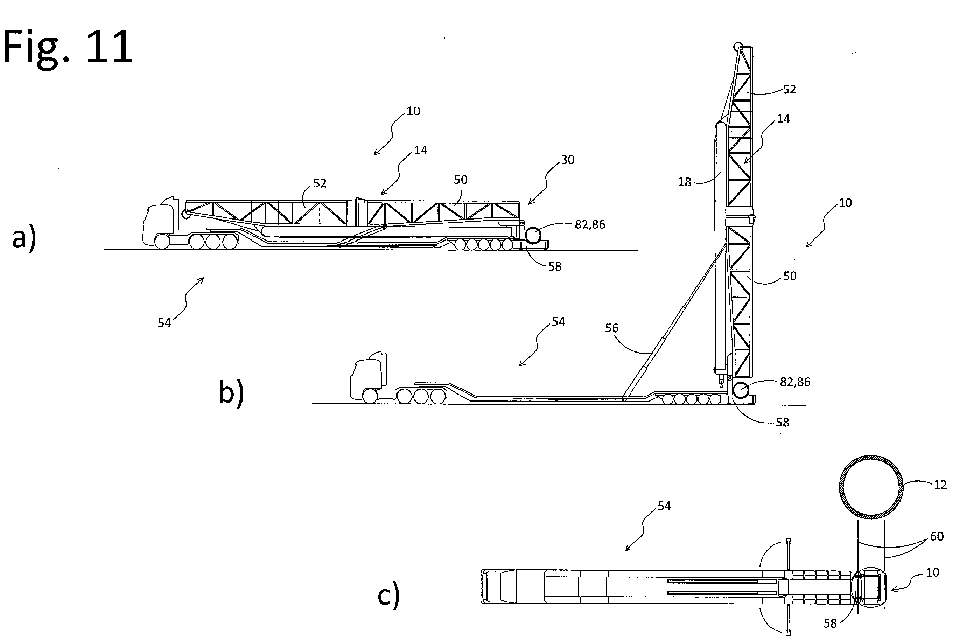

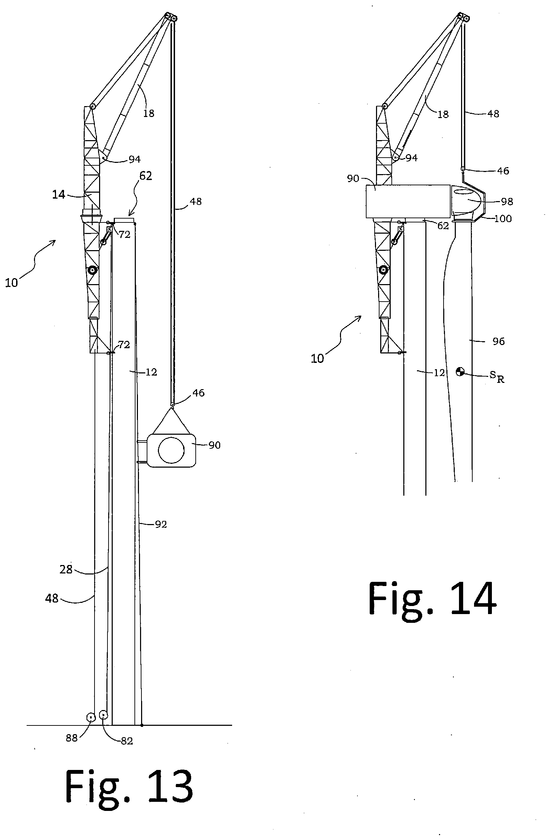

Die Figur 6 zeigt eine Detailansicht der Kranvorrichtung 10 im Bereich ihres axial unteren Endes 30 und veranschaulicht, dass der Kranturm 14 in Richtung seiner Längsachse A teleskopierbar ist. Dadurch lässt sich die axiale Abmessung des Kranturms 14 beispielsweise in einem Transportzustand der Kranvorrichtung 10 auf einem Spezialtieflader minimieren (siehe auch Figur 11a) und in einem Betriebszustand der Kranvorrichtung 10 maximieren (siehe auch Figur 13), um die Momentenbeanspruchung des Turmbauwerks 12 zu verringern .

Die Figuren 7 und 8 zeigen eine Detailansicht der Kranvorrichtung 10 im Bereich des axial unteren Endes 30 im Montagezustand bzw. im Betriebszustand der Kranvorrichtung 10. Dabei wird nochmals deutlich, dass der Kranturm 14 über das Kranfahrwerk 20 frei schwenkbar zum Turmbauwerk 12 ist, wobei die Längsachse A des Kranturms 14 im Montagezustand gemäß Figur 7 zur Vertikalrichtung 16 um α ≈ 5° geneigt ist und im Betriebszustand gemäß Figur 8 im Wesentlichen vertikal verläuft.

Außerdem weist das Kranfahrwerk 20 gemäß den Figuren 7 und 8 im Bereich der Kontaktmittel 22 eine Arretiereinrichtung 44 zum Fixieren der Kranvorrichtung 10 am Turmbauwerk 12 auf. Diese Arretiereinrichtung 44 verbindet die Kranvorrichtung 10 formschlüssig mit dem Turmbauwerk 12 und verhindert insbesondere, dass sich das Kranfahrwerk 20 (und damit der Kranturm 14) im Betriebszustand der Kranvorrichtung 10 radial vom Turmbauwerk 12 entfernt. Hingegen ist im Montagezustand der Kranvorrichtung 10 radial vom Turmbauwerk 12 weg bevorzugt kein Formschluss mit dem Turmbauwerk 12 vorhanden.

Die Figuren 9 und 10 zeigen Detailausschnitte der Kranvorrichtung 10 im Bereich der Befestigungseinrichtung 34 im Montage- bzw. Betriebszustand. Der Kranturm 14 weist hierbei einen unteren Turmabschnitt 50 und einen axial daran angrenzenden, oberen Turmabschnitt 52 auf, der gegenüber dem unteren Turmabschnitt 50 um die Längsachse A drehbar ist, wobei der untere Turmabschnitt 50 das Kranfahrwerk 20, die Kranaufhängung 26 und die Befestigungseinrichtung 34 zum Fixieren der Kranvorrichtung 10 am Turmbauwerk 12 aufweist. Der Ausleger 18 ist hingegen am oberen Turmabschnitt 52 schwenkbar befestigt, wobei sich der Ausleger 18 im Montagezustand der Kranvorrichtung 10 im Wesentlichen parallel zur Längsachse A des Kranturms 14 nach unten erstreckt (Figur 1), sodass eine Lastenunterflasche 46 der Kranvorrichtung 10 axial im Bereich des unteren Turmabschnitts 50, insbesondere im Bereich des unteren Endes 30 des Kranturms 14 angeordnet ist. Die Kranvorrichtung 10 ist in dem dargestellten Ausführungsbeispiel folglich ein mobiler, frei schwenkbarer Kran nach Art eines Turmdrehkrans.

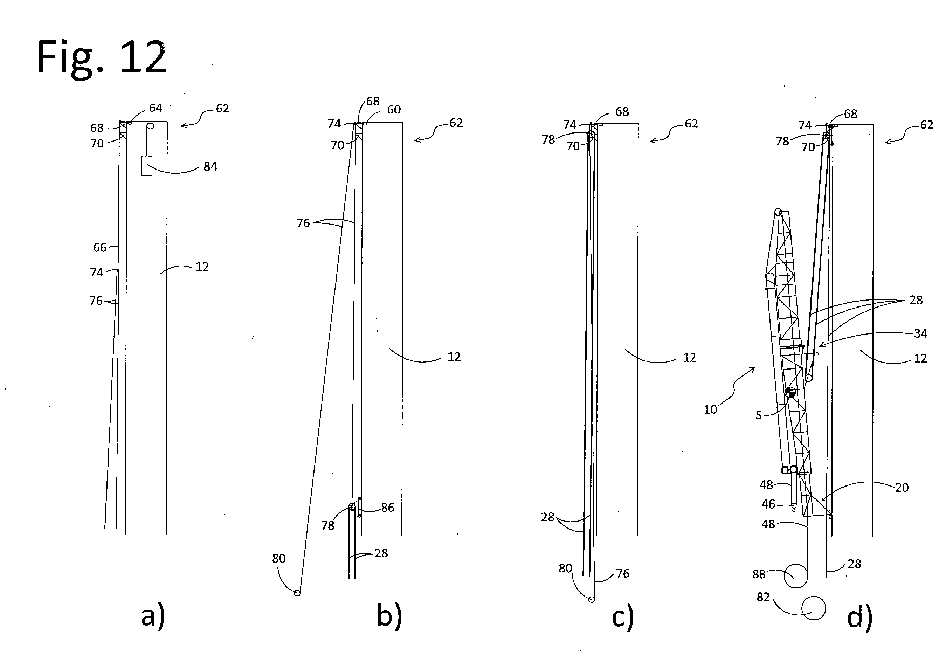

Gemäß Figur 1 ist die Lastenunterflasche 46 im Montagezustand der Kranvorrichtung 10 frei hängend an einem Lastseil 48 der Kranvorrichtung 10 angeordnet. Für den bevorzugten Fall, dass sowohl eine Kranwinde 82 für das Kranseil 28 als auch eine Lastwinde 88 für das Lastseil 48 am Boden verbleiben (siehe Figur 12d), ist durch die frei hängende Lastenunterflasche 46 sichergestellt, dass beim Bewegen der Kranvorrichtung 10 mittels der Kranwinde 82 das Lastseil 48 weder übermäßig gespannt wird noch schlaff fällt. Abstimmungstoleranzen bei der Drehzahlsteuerung der beiden Winden 82, 88 können dabei durch eine Relativbewegung zwischen der Lastenunterflasche 46 und dem Kranturm 14 kompensiert werden. Eine aufwendige, exakte Abstimmung der Windensteuerungen ist somit nicht notwendig.

Gemäß den Figuren 9 und 10 ist die Befestigungseinrichtung 34 im Montagezustand der Kranvorrichtung 10 zunächst vom Turmbauwerk 12 beabstandet und erst im Betriebszustand, das heißt in der Endmontageposition der Kranvorrichtung 10 am Turmbauwerk 12, mit dem Turmbauwerk 12 formschlüssig verbunden.

Insbesondere weisen die Befestigungsarme 36 der Befestigungseinrichtung 34 Eingriffsbolzen auf, welche im Betriebszustand der Kranvorrichtung 10 gemäß Figur 10 in entsprechende Verankerungsausnehmungen des Turmbauwerks 12 eingreifen und sowohl Vertikal- als auch Horizontalkräfte der Kranvorrichtung 10 in das Turmbauwerk 12 einleiten können.

Anhand der Figuren 11 und 12 wird im Folgenden auf das Verfahren zur temporären Montage der oben beschriebenen, mobilen Kranvorrichtung 10 an einem bestehenden Turmbauwerk 12 einer Windenergieanlage eingegangen.

Das Gewicht und die Abmessungen der mobilen Kranvorrichtung 10 sind bevorzugt so ausgelegt, dass im Wesentlichen die gesamte Kranvorrichtung 10 auf einem einzigen Krantransporter 54 zu verschiedenen Turmbauwerken 12 befördert werden kann. Gemäß Figur 11a ist die Kranvorrichtung 10 beispielhaft in einem liegenden Transportzustand auf einem Spezialtieflader dargestellt.

Zur Montage an einem bestehenden Turmbauwerk 12 wird die Kranvorrichtung 10 durch einen Stellzylinder 56 des Krantransporters 54 aufgerichtet, das heißt von ihrem liegenden Transportzustand gemäß Figur 11a in einen stehenden Montagezustand gemäß Figur 11b überführt.

Bevorzugt wird vom Krantransporter 54 oder einem Begleitfahrzeug ein Transportbock 58 mitgeführt, auf dem die Kranvorrichtung 10 nach dem Aufrichten aus dem Transportzustand steht (Figur 11b).

Der Transportbock 58 ist gemäß den Figuren 11a bis 11c fahrbar ausgebildet, um die Kranvorrichtung 10 mittels des Transportbocks 58 vom Krantransporter 54 zum Turmbauwerk 12 zu fahren, wobei es sich bei der mit dem Transportbock 58 zurückzulegenden Strecke maximal um wenige Meter handelt. Damit die Standsicherheit der Kranvorrichtung 10 auf dem fahrbaren Transportbock 58 gewährleistet ist, erfolgt der Transport bevorzugt auf Schienen 60, die eine möglichst exakte horizontale Ausrichtung aufweisen. Im Übrigen kann die Kranvorrichtung 10 nach dem Aufrichten durch eine Seilsicherung mit dem Turmbauwerk 12 verbunden werden, um die Kranvorrichtung 10 bei der Bewegung auf dem Transportbock 58 gegen Kippen zu sichern.

Ferner ist die Kranvorrichtung 10 auf dem Transportbock 58 schwenkbar gelagert und kann dementsprechend um die Längsachse A gedreht werden. Somit lässt sich die Kranvorrichtung 10 mittels des Stellzylinders 56 und des Transportbocks 58 vom liegenden Transportzustand in den stehenden Montagezustand am Turmbauwerk 12 überführen.

Gewöhnlich weist das Turmbauwerk 12 aus Gründen der Wirtschaftlichkeit kein permanent installiertes Schwerlast-Hebezeug auf, welches die Kranvorrichtung 10 zur Turmkrone 62 des Turmbauwerks 12 heben könnte. Allerdings wird davon ausgegangen, dass am Turmbauwerk 12 eine Pilotwinde 64 mit Pilotseil 66 sowie im Bereich der Turmkrone 62 ein radial abstehender Hilfskragarm 68, ein radial abstehender Hauptkragarm 70 sowie mehrere Kranlager 72 vorgesehen sind.

Zur temporären Montage der Kranvorrichtung 10 am Turmbauwerk 12 wird daher folgender Verfahrensablauf vorgeschlagen:
Zunächst wird gemäß Figur 12a eine Pilotflasche 74 mit einem Rüstseil 76 von der Pilotwinde 64 am Turmbauwerk 12 zur Turmkrone 62 nach oben gezogen und an einem freien Ende des Hilfskragarms 68 befestigt.

Gemäß Figur 12b wird anschließend eine Rüstflasche 78 mit dem Kranseil 28 von einer am Boden befindlichen Rüstwinde 80 am Turmbauwerk 12 nach oben gezogen und gemäß Figur 12c an einem freien Ende des Hauptkragarms 70 befestigt.

Nachfolgend wird dann die Kranvorrichtung 10 von einer vorzugsweise am Boden befindlichen Kranwinde 82 am Turmbauwerk 12 hochgezogen, wobei sich die Kranvorrichtung 10 über das Kranfahrwerk 20 am Turmbauwerk 12 abstützt und das Kranfahrwerk 20 axial auf einer Oberfläche des Turmbauwerks 12 entlang rollt (Figur 12d).

Schließlich wird die Kranvorrichtung 10 in einer Endmontageposition an den Kranlagern 72 fixiert und vom Montagezustand in den Betriebszustand (Figur 2) überführt.

Je nach Ausstattung und Konstruktion des Turmbauwerks 12 sind verschiedene Verfahrensvarianten denkbar oder gewisse Anpassungen des Verfahrens notwendig. So ist beispielsweise denkbar, dass das Turmbauwerk 12 lediglich einen einzigen Kragarm aufweist, an dem sowohl die Pilotflasche 74 als auch die Rüstflasche 78 eingehängt werden kann. Mit anderen Worten wäre in diesem Fall der Hilfskragarm 68 mit dem Hauptkragarm 70 identisch bzw. einstückig ausgeführt.

Ferner kann die Pilotwinde 64 mit dem Pilotseil 66 fest im Bereich der Turmkrone 62 installiert sein oder alternativ zu Beginn des Montageverfahrens durch ein Leichtlast-Hebezeug 84 zur Turmkrone 62 transportiert werden. Ein solches Leichtlast-Hebezeug 84, zum Beispiel ein einfacher Kettenzug oder Lastenaufzug, ist üblicherweise zum Transport von Kleinteilen in jedem Turmbauwerk 12 vorhanden und kann bei einer Traglast von etwa 300-500 kg die Pilotwinde 64 mit Pilotseil 66 zur Turmkrone 62 befördern.

Die Pilotwinde 64 mit dem Pilotseil 66 ist dann auf eine Traglast von etwa 3-5 t ausgelegt und kann somit die Rüstflasche 78 mit dem Kranseil 28 heben.

Wie in Figur 12b angedeutet, ist die Rüstflasche 78 dabei vorzugsweise auf einer Transporteinheit 86, beispielsweise einem Transportwagen oder -schlitten, montiert und wird so nach oben gezogen, dass die Transporteinheit 86 auf der Oberfläche des Turmbauwerks 12 entlang rollt oder gleitet. Dadurch wird auf einfache Art und Weise eine Beschädigung des Turmbauwerks 12 durch die schwere Rüstflasche 78 zuverlässig verhindert.

Sowohl die Kranwinde 82 zum axialen Bewegen der Kranvorrichtung 10 mittels des Kranseils 28 als auch eine Lastwinde 88 zum axialen Bewegen von Komponenten der Windenergieanlage mittels des Lastseils 48 befinden sich gemäß Figur 12d am Boden, wobei die Lastenunterflasche 46 der Kranvorrichtung 10 beim Hochziehen der Kranvorrichtung 10 gemäß Figur 12d frei am Lastseil 48 hängt und über die Lastwinde 88 zusammen mit der Kranvorrichtung 10 zur Turmkrone 62 hochgezogen wird.

Durch die frei hängende Lastenunterflasche 46 ist sichergestellt, dass beim Bewegen der Kranvorrichtung 10 mittels der Kranwinde 82 das Lastseil 48 weder übermäßig gespannt ist noch schlaff fällt. Abstimmungstoleranzen bei der Drehzahlsteuerung der Kranwinde 82 und der Lastwinde 88 werden dabei durch eine Relativbewegung zwischen der Lastenunterflasche 46 und dem Kranturm 14 kompensiert. Eine aufwendige, exakte Abstimmung der Windensteuerung ist somit nicht notwendig.

Die Figur 13 zeigt die Kranvorrichtung 10 in ihrem Betriebszustand beim Heben einer sogenannten Gondel 90 der Windenergieanlage auf die Turmkrone 62. Um ein unerwünschtes Schwingen der Gondel 90 beispielsweise infolge Seitenwind zu verhindern, sind gemäß Figur 13 Führungsseile 92 vorgesehen, die einen kontrollierten Transport der Gondel 90 sicherstellen.

Der als Nadelausleger ausgeführte Ausleger 18 der Kranvorrichtung 10 ist in einem Schwenklager 94 an den Kranturm 14 angelenkt, wobei ein vertikaler Abstand zwischen diesem Schwenklager 94 und der Turmkrone 62 wenigstens einer vertikalen Abmessung der Gondel 90 entspricht, sodass der Ausleger 18 der als Turmdrehkran ausgeführten Kranvorrichtung 10 die Gondel 90 auch nach deren Montage problemlos überfahren kann (siehe Figur 14).

Die Figur 14 zeigt die am Turmbauwerk 12 montierte Kranvorrichtung 10 in ihrem Betriebszustand beim Anbau eines Rotorblatts 96 der Windenergieanlage.

Bei der Montagevariante gemäß Figur 14 erstreckt sich das Rotorblatt 96 im Wesentlichen vertikal und wird von unten an eine Nabe 98 der Gondel 90 angesetzt. Um eine solche Montage zu ermöglichen, ist das Rotorblatt 96 mittels einer speziellen Montagevorrichtung 100 an die Lastenunterflasche 46 der Kranvorrichtung 10 angehängt.

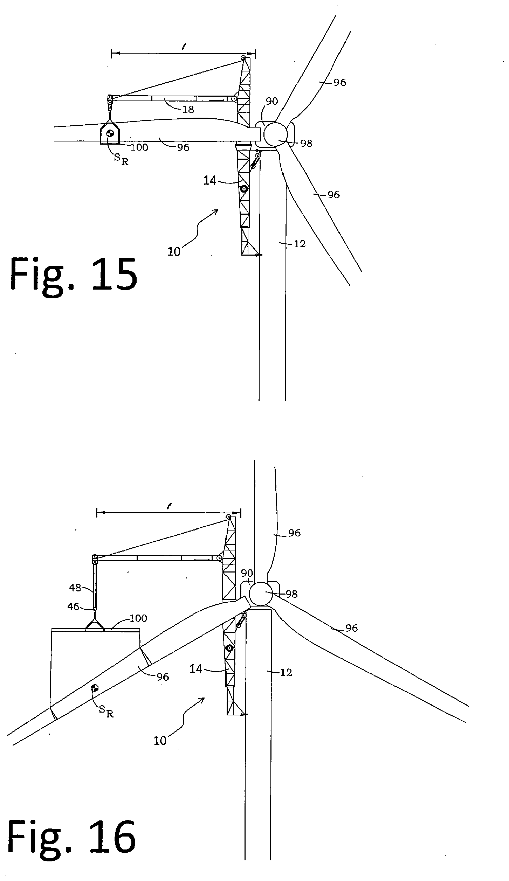

In der Verfahrensvariante gemäß Figur 15 erstreckt sich das Rotorblatt 96 im Wesentlichen horizontal, wird in seinem Schwerpunkt S_{R} gehoben und im Wesentlichen horizontal an die Nabe 98 der Gondel 90 angesetzt. Je nach Abmessung des Rotorblatts 96 muss die Kranvorrichtung 10 bei dieser Montagevariante eine relativ große Auslegerlänge I aufweisen.

Durch eine entsprechende Anpassung der Montagevorrichtung 100 gemäß Figur 16 lässt sich das Rotorblatt 96 auch schräg von unten an die Nabe 98 der Gondel 90 ansetzen, wodurch sich die Auslegerlänge I reduziert.

Eine Demontage der Kranvorrichtung 10 vom Turmbauwerk 12 sowie deren Verladung auf den Krantransporter 54 erfolgt analog zu der anhand der Figuren 11 und 12 erläuterten Entladung und Montage der Kranvorrichtung 10, lediglich in umgekehrter Reihenfolge.

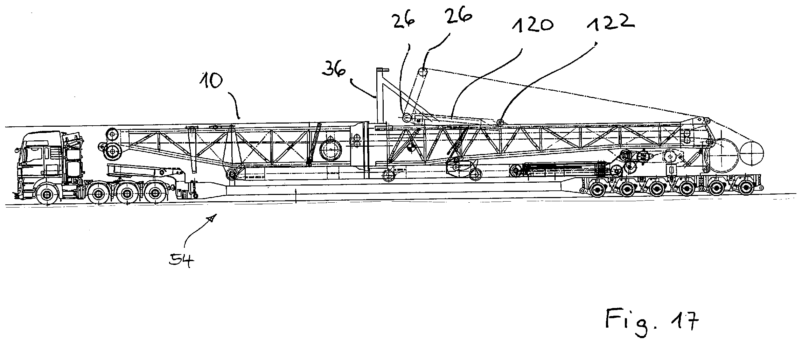

In Figur 17 ist eine weitere Variante der Kranvorrichtung 10 dargestellt, die im Wesentlichen der zuvor erläuterten Kranvorrichtung 10 entspricht, sodass im Folgenden nur auf die Unterschiede eingegangen wird.

Figur 17 zeigt die Kranvorrichtung 10 in liegendem Zustand auf einem Krantransporter 54. Sobald der Krantransporter 54 den Aufstellungsort erreicht hat, werden die Befestigungsarme 36 zum Fixieren der Kranvorrichtung 10 am Turmbauwerk 12 angebracht.

Darüber hinaus ist in Figur 17 zu erkennen, dass im Gegensatz zur vorhergehenden Ausführungsform die Kranaufhängung 26 beweglich ausgeführt ist. Die Kranaufhängung 26 ist nämlich in Längsrichtung des Kranturms 14 als auch quer in hierzu einstellbar und verfahrbar ausgeführt. Hierzu ist die Kranvorrichtung 10 an einem ausfahrbaren Hydraulikzylinder 120 angebracht, welcher zu dem über einen Schwenkpunkt 122 am Kranturm 14 angebracht und relativ zum Schwenkpunkt 122 nach außen motorisch schwenkbar ist.

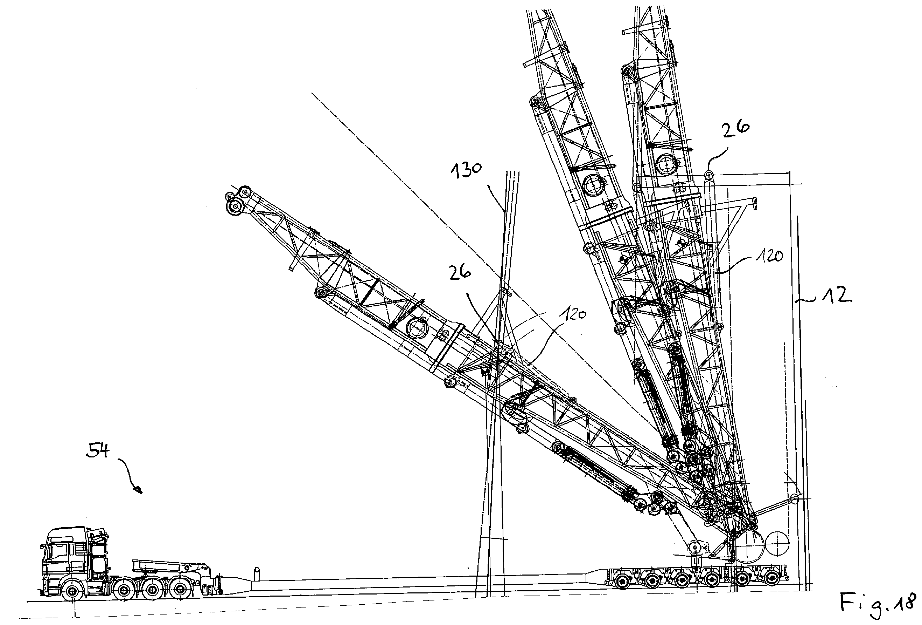

Figur 18 zeigt verschiedene Stufen während des Aufstellens der Kranvorrichtung 10. Die Kranvorrichtung 10 wird dabei auf dem Krantransporter 54 aufgerichtet, wobei im Unterschied zur vorhergehenden Ausführungsform der Krantransporter 54 ohne Stellzylinder 56 ausgeführt ist. Bei dieser Ausführungsform greift ein Seil 130 an der Kranaufhängung 26 an, welche zum oberen Ende des Turmbauwerks 12 und von diesem vorzugsweise auch wieder abwärts zum Fuß des Turmbauwerks 12 führt. Das Seil 130 kann optional das Kranseil 28 der vorhergehenden Ausführungsformen sein, also vom Fuß des Turmbauwerks 12 aus angetrieben werden. Optional kann der Antrieb auch an dem oberen Ende des Turmbauwerks 12 sitzen, wobei diesem Fall Übersetzungen vorhanden sein müssen, um die Kranvorrichtung 10 aufzurichten.

Eine Variante der Erfindung sieht vor, dass das Seil 130 Teil eines Flaschenzugs ist, welcher im Bereich der Kranaufhängung 26 und im Bereich des oberen Endes des Turmbauwerks 12 entsprechende Umlenkrollen besitzt.

Zu erkennen ist bei den verschiedenen Stellungen in Figur 18, dass während des Hochschwenkens der Kranvorrichtung 10 der Hydraulikzylinder 120 ausgefahren wird und zudem weg vom Kranturm 14 geschwenkt wird, um bei aufgerichtetem Kranturm 14 noch eine Schrägstellung des Kranturms 14 zum Turmbauwerk 12 zu realisieren.

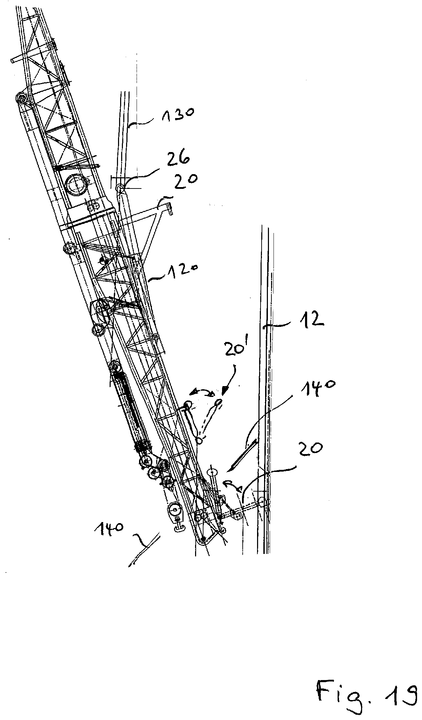

Figur 19 zeigt die Stellung des Kranturms 14 beim Hochfahren. Bei dieser Ausführungsform hat die Kranvorrichtung 10 an ihrem unteren Ende zwei voneinander in vertikaler Richtung beanstandete Kranfahrwerke 20, 20', welche ein- und ausfahrbar sind, genauer gesagt schwenkbar am Kranturm 14 angebracht sind. Wenn am Kranturm 14 nämlich Abspannseile 140 zwischen dem oberen Ende und dem unteren Ende seitlich schräg nach außen zum Boden verlaufen, könnte die Kranvorrichtung 10 mit einem einzigen Kranfahrwerk 20, 20' nicht über den entsprechenden Abspannpunkt an dem Turmbauwerks 12 fahren. Wenn das vertikal untere Kranfahrwerk 20 zu den Abspannpunkten der Abspannseile 140 am Turmbauwerk 12 herangefahren wurde, wird das zu diesem Zeitpunkt eingefahrene, obere Kranfahrwerk 20' ausgefahren, so dass das Kranfahrwerk 20' das Turmbauwerk 12 oberhalb der Abspannpunkte berührt. Anschließend wird das untere Kranfahrwerk 20 eingefahren. Damit steigt sozusagen der Kranturm 14 über den Abspannpunkt. Für das letzte Stück beim Herauffahren der Kranvorrichtung 10 kann entweder mit dem Kranfahrwerk 20 oder mit dem Kranfahrwerk 20' gearbeitet werden.

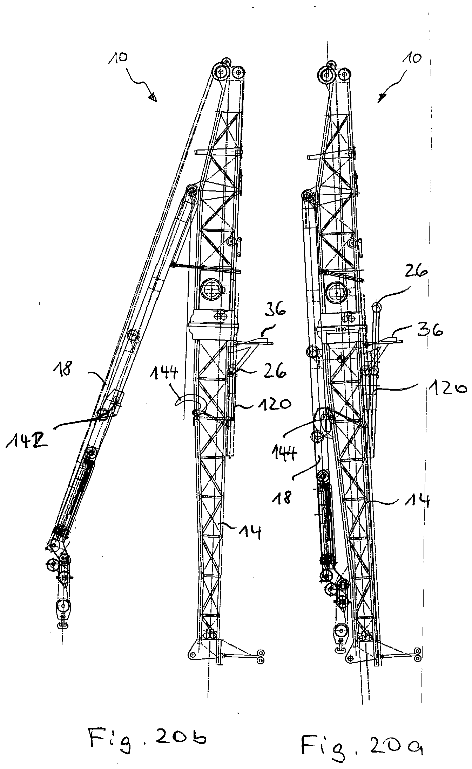

Beim Hochziehen der Kranvorrichtung 10 auf die Spitze des Turmbauwerks 12 ist die Kranvorrichtung 10 mit ihrem oberen Ende nach außen gekippt (siehe Figur 20a). Eine mechanische Arretiervorrichtung 144 kann in diesem Fall sinnvoll sein, um den Ausleger 18, welcher beim Hochfahren an den Kranturm 14 herangeschwenkt ist (eingeklappter Zustand der Kranvorrichtung 10), formschlüssig am Kranturm 14 zu halten. Gemäß einer Ausführungsform der Erfindung ist eine sichelförmige, schwenkbare Arretiervorrichtung 144 beispielsweise am Kranturm 14 vorhanden, die nach außen zum Ausleger 18 schwenkt, um ihn mechanisch an den Kranturm 14 anzukoppeln.

Figur 20b zeigt die Kranvorrichtung 10 in einem Zustand, wenn sie die Spitze des Turmbauwerks 12 erreicht hat und an dieser mittels der Befestigungsarme 36 fixiert ist. Hier wird der Ausleger 18 nach außen geschwenkt, zuvor jedoch wurde die sichelförmige Arretiervorrichtung 144 zum Lösen aufgeschwenkt. Die Arretiervorrichtung 144 wirkt mit einem Haken oder Bolzen 142 am Ausleger 18 zusammen und kann diesen hintergreifen.

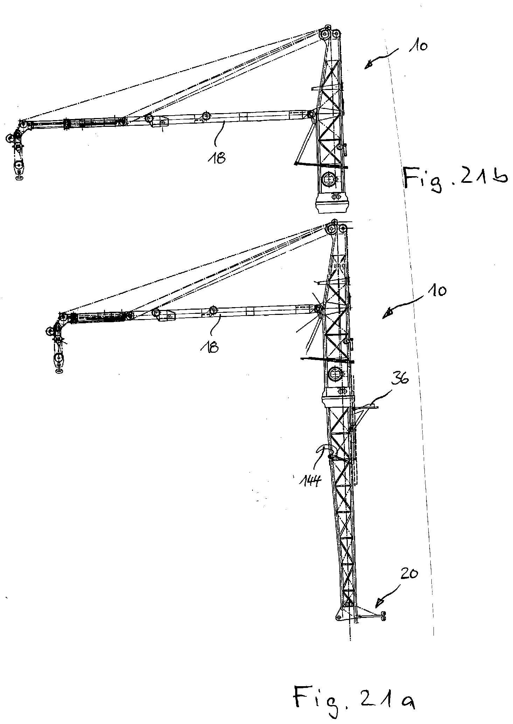

Die Figuren 21a und b zeigen, dass der Ausleger 18 ein in seiner Längsrichtung ausfahrbarer und damit längenverstellbarer Ausleger ist. Dies kann beispielsweise durch einen teleskopierbaren Ausleger realisiert werden. Durch einen solchen ausfahrbaren Ausleger ist es möglich, extrem lange Rotorblätter zur Spitze des Turmbauwerks 12 zu transportieren.

## Patentansprüche

1. Mobile Kranvorrichtung zur temporären Montage an einem bestehenden Turmbauwerk (12) einer Windenergieanlage, mit
einem Kranturm (14), der eine Längsachse (A) aufweist, welche in einem Montagezustand der Kranvorrichtung (10) am Turmbauwerk (12) zur Vertikalrichtung (16) geneigt ist und sich in einem am Turmbauwerk (12) montierten Betriebszustand der Kranvorrichtung (10) im Wesentlichen vertikal erstreckt,
einem am Kranturm (14) schwenkbar befestigten Ausleger (18), der im Montagezustand der Kranvorrichtung (10) nach unten geklappt ist,
einem Kranfahrwerk (20), das im Montagezustand der Kranvorrichtung (10) seitlich vom Kranturm (14) zum Turmbauwerk (12) hin absteht und Kontaktmittel (22) hat, mit denen die Kranvorrichtung (10) sich am Turmbauwerk (12) abstützt und entlang von diesem vertikal verfahrbar ist, sowie
einer am Kranturm (14) ausgebildeten Kranaufhängung (26) zur Anbringung eines am Turmbauwerk (12) zu lagernden Kranseils (28) zum vertikalen Verfahren der Kranvorrichtung (10), wobei die Kranaufhängung (26) einen Kraftangriffspunkt (P) für das Kranseil (28) definiert, der im Montagezustand der Kranvorrichtung (10) in vertikaler Draufsicht radial zwischen den Kontaktmitteln (22) und dem Schwerpunkt (S) der Kranvorrichtung (10) angeordnet ist,
wobei der Kranturm (14) im Montagezustand der Kranvorrichtung (10) über das Kranfahrwerk (20) frei schwenkbar zum Turmbauwerk (12) ist.

2. Kranvorrichtung nach Anspruch 1, **dadurch gekennzeichnet, dass** das Kranfahrwerk (20) zwei in Umfangsrichtung (24) beabstandete Kontaktmittel (22) zur Abstützung am Turmbauwerk (12) aufweist, wobei der Kraftangriffspunkt (P) der Kranaufhängung (26) in Umfangsrichtung (24) im Wesentlichen mittig zwischen den beiden Kontaktmitteln (22) angeordnet ist.

3. Kranvorrichtung nach Anspruch 1 oder 2, **dadurch gekennzeichnet, dass** die Kontaktmittel (22) Stützräder sind, die an einer Oberfläche des Turmbauwerks (12) entlang rollen können.

4. Kranvorrichtung nach einem der vorhergehenden Ansprüche, **dadurch gekennzeichnet, dass** das Kranfahrwerk (20), insbesondere im Bereich der Kontaktmittel (22), eine Arretiereinrichtung (44) zum Fixieren der Kranvorrichtung (10) am Turmbauwerk (12) aufweist.

5. Kranvorrichtung nach einem der vorhergehenden Ansprüche, **dadurch gekennzeichnet, dass** der Kranturm (14) in axialer Richtung ein Kranfahrwerk (20) aufweist, das im Montagezustand der Kranvorrichtung (10) unterhalb des Schwerpunkts (S) der Kranvorrichtung (10) an einem unteren Ende (30) des Kranturms (14) angeordnet ist, insbesondere wobei genau ein Kranfahrwerk vorhanden ist, und/oder **dadurch gekennzeichnet, dass** der Kranturm (14) kein Fahrwerk im Bereich seiner oberen Hälfte, bezogen auf den Montagezustand, hat.

6. Kranvorrichtung nach einem der vorhergehenden Ansprüche, **dadurch gekennzeichnet, dass** das Kranfahrwerk (20) ein einseitiges Fahrwerk ist, welches im Montagezustand der Kranvorrichtung (10) nur an einer Turmumfangshälfte (38) des Turmbauwerks (12) anliegt.

7. Kranvorrichtung nach einem der vorhergehenden Ansprüche, **dadurch gekennzeichnet, dass** das Kranfahrwerk (20) lenkbar ist.

8. Kranvorrichtung nach einem der vorhergehenden Ansprüche, **dadurch gekennzeichnet, dass** am Kranturm (14) eine Befestigungseinrichtung (34) zum Fixieren der Kranvorrichtung (10) am Turmbauwerk (12) vorgesehen ist, wobei die Befestigungseinrichtung (34) seitlich vom Kranturm (14) absteht.

9. Kranvorrichtung nach Anspruch 8, **dadurch gekennzeichnet, dass** die Kranaufhängung (26) in axialer Richtung näher an der Befestigungseinrichtung (34) als am Kranfahrwerk (20) angeordnet ist.

10. Kranvorrichtung nach einem der vorhergehenden Ansprüche, **dadurch gekennzeichnet, dass** der Kranturm (14) im Montagezustand der Kranvorrichtung (10) einen unteren Turmabschnitt (50) und einen daran angrenzenden, oberen Turmabschnitt (52) umfasst, der gegenüber dem unteren Turmabschnitt (50) um die Längsachse (A) drehbar ist, wobei der untere Turmabschnitt (52) das Kranfahrwerk (20), die Kranaufhängung (26) und eine Befestigungseinrichtung (34) zum Fixieren der Kranvorrichtung (10) am Turmbauwerk (12) aufweist.

11. Kranvorrichtung nach einem der vorhergehenden Ansprüche, **dadurch gekennzeichnet, dass** eine Lastenunterflasche (46) vorgesehen ist, die im Montagezustand der Kranvorrichtung (10) frei hängend an einem Lastseil (48) angeordnet ist.

12. Kranvorrichtung nach einem der vorhergehenden Ansprüche, **dadurch gekennzeichnet, dass** die Kranaufhängung (26) in Längsrichtung und/oder Querrichtung des Kranturms (14) verstellbar am Kranturm (14) angebracht ist, insbesondere über einen verschwenkbaren Teleskopzylinder.

13. Kranvorrichtung nach einem der vorhergehenden Ansprüche, **dadurch gekennzeichnet, dass** am Kranturm (14) eine Arretiervorrichtung (144) vorgesehen ist, die den Ausleger (18) formschlüssig am Kranturm (14) in der eingeklappten Stellung hält.

14. Kranvorrichtung nach einem der vorhergehenden Ansprüche, **dadurch gekennzeichnet, dass** der Ausleger (18) ein in seiner Längsrichtung ausfahrbarer, insbesondere teleskopierbarer Ausleger (18) ist.

15. Verfahren zur temporären Montage einer mobilen Kranvorrichtung (10) gemäß einem der vorhergehenden Ansprüche an einem bestehenden Turmbauwerk (12) einer Windenergieanlage, wobei das Turmbauwerk (12) eine Pilotwinde (64) mit Pilotseil (66) sowie im Bereich einer Turmkrone (62) einen radial abstehenden Hilfskragarm (68), einen radial abstehenden Hauptkragarm (70) und mehrere Kranlager (72) aufweist, wobei das Verfahren folgende Schritte umfasst:
a) die mobile Kranvorrichtung (10) wird von einem liegenden Transportzustand in einen stehenden Montagezustand am Turmbauwerk (12) überführt;
b) eine Pilotflasche (74) mit einem Rüstseil (76) wird von der Pilotwinde (64) am Turmbauwerk (12) hochgezogen;
c) die Pilotflasche (74) wird an einem freien Ende des Hilfskragarms (68) befestigt;
d) eine Rüstflasche (78) mit einem Kranseil (28) wird von einer am Boden befindlichen Rüstwinde (80) am Turmbauwerk (12) hochgezogen;
e) die Rüstflasche (78) wird an einem freien Ende des Hauptkragarms (70) befestigt;
f) die Kranvorrichtung (10) wird von einer Kranwinde (82) am Turmbauwerk (12) hochgezogen, wobei sich die Kranvorrichtung (10) über das Kranfahrwerk (20) am Turmbauwerk (12) abstützt und das Kranfahrwerk (20) axial auf einer Oberfläche des Turmbauwerks (12) entlang rollt; und
g) die Kranvorrichtung (10) wird in einer Endmontageposition an den Kranlagern (72) fixiert und vom Montagezustand in einen Betriebszustand überführt.

## Claims

1. Mobile crane device for temporary operation purpose at an existing tower structure (12) of a wind turbine,
featuring a crane tower (14) having a longitudinal axis (A) which is inclined to the vertically direction (16) of the tower structure (12) in a pre-installed state of the crane device (10) and extends mainly vertical in an installed operating state of the crane device (10) attached to the tower structure (12),
featuring a jib (18) which is pivotably mounted on the crane tower (14) and, in the pre-installed state of the crane device (10), is folded down,
featuring a crane chassis (20) which, in the pre-installed state of the crane device (10), projects laterally from the crane tower (14) towards the tower structure (12) having contact means (22), that supporting the crane device (10) on the tower structure (12) and move it vertically along it, and
featuring a crane suspension (26) at the crane tower (14) for housing a crane rope (28) that is mounted at the tower structure (12) for vertical movement of the crane device (10), whereas the crane suspension (26) defines in vertical plan view a point of application of force (P) for the crane rope (28), which is situated radially between the contact means (22) and the center of gravity (S) of the crane device (10) when the crane device (10) is pre-installed,
and whereas the crane tower (14) in the pre-installed state of the crane device (10) is freely pivotable to the tower structure (12) via the crane chassis (20).

2. Crane device according to claim 1, **characterized in that** the crane trolley (20) has two contact means (22) that are spaced apart in the circumferential direction (24) for supporting-purpose onto the tower structure (12), whereas the force application point (P) of the crane suspension (26) is arranged mainly centrally between the two contact means (22) in the circumferential direction (24).

3. Crane device according to claim 1 or 2, **characterized in that** the contact means (22) are support wheels which can roll along a surface of the tower structure (12).

4. Crane device according to one of the preceding claims, **characterized in that** the crane trolley (20), in particular in the region of the contact means (22), has a locking device (44) for fixing the crane device (10) to the tower structure (12).

5. Crane device according to one of the preceding claims, **characterized in that** the crane tower (14) in the axial direction has a crane trolley (20) which in the pre-installed state of the crane device (10) is arranged below the center-point of gravity (S) of the crane device (10) at a lower end (30) of the crane tower (14), in particular with exactly one crane trolley existing, and/or **characterized in that** in relation to the pre-installed state the crane tower (14) has no further trolley in the region of its upper half.

6. Crane device according to one of the preceding claims, **characterized in that** the crane chassis (20) is an unilateral chassis which, in the pre-installed state of the crane device (10) only exerts against one half of the lateral area of the tower (38) of the tower structure (12).

7. Crane device according to one of the preceding claims, **characterized in that** the crane trolley (20) is steerable.

8. Crane device according to one of the preceding claims, **characterized in that** a fastening device (34) is provided on the crane tower (14) for fixing the crane device (10) to the tower structure (12), whereas the fastening device (34) projects laterally from the crane tower (14).

9. Crane device according to claim 8, **characterized in that** the crane suspension (26) is arranged closer in axial direction to the fastening device (34) than to the crane trolley (20).

10. Crane device according to one of the preceding claims, **characterized in that** the crane tower (14) in the pre-installed state of the crane device (10) comprises a lower tower section (50) and an upper tower section (52) adjoined thereto which is rotatable about the longitudinal axis (A) relative to the lower tower section (50), whereas the lower tower section (50) has the crane trolley (20), the crane suspension (26) and a fastening device (34) for fixing the crane device (10) to the tower structure (12).

11. Crane device according to one of the preceding claims, **characterized in that** a hook block (46) is provided which is freely suspended by a load cable (48) in the pre-installed state of the crane device (10).

12. Crane device according to one of the preceding claims, **characterized in that** the crane suspension (26) is mounted on the crane tower (14) in an adjustable manner in longitudinal and/or transverse direction of the crane tower (14), in particular via a pivotable telescopic cylinder.

13. Crane device according to one of the preceding claims, **characterized in that** a locking device (144) is provided on the crane tower (14), which holds the jib (18) positively to the crane tower (14) in the folded position.

14. Crane device according to one of the preceding claims, **characterized in that** the jib (18) is a jib (18) which can be extended in its longitudinal direction, in particular telescoped.

15. Method for temporarily mounting a mobile crane device (10) to an existing tower structure of a wind turbine (12) in accordance with one of the preceding requirements, whereas the tower structure (12) has a pilot winch (64) with a pilot rope (66) and in the region of a tower top (62), has a radially projecting auxiliary cantilever arm (68) and has a radially projecting main cantilever arm (70) and has several crane bearings (72), whereas the method comprises the following steps:
a) the mobile crane device (10) is transferred from a horizontal transport - position into a pre-installed state next to the tower structure (12);
b) a pilot pulley (74) with a set-up rope (76) is pulled up by the pilot winch (64) on the tower structure (12);
c) the pilot pulley (74) is attached to a free end of the auxiliary cantilever (68);
d) a set-up pulley (78) with a crane rope (28) is lifted up by a set-up winch (80) on the tower structure (12) located on the ground;
e) the set-up pulley (78) is fastened to a free end of the main cantilever (70);
f) the crane device (10) is pulled up on the tower structure (12) by a crane winch (82), the crane device (10) being supported on the tower structure (12) via the crane trolley (20) and the crane trolley (20) rolling axially along a surface of the tower structure (12); and
g) the crane device (10) is fixed to the crane bearings (72) in a final position and then transferred from the pre-installed state into an operating state.

## Revendications

1. Dispositif de grue mobile pour la montage temporaire sur une structure de tour préexistante d'une éolienne (12),
comprenant une tour de grue (14) qui présente un axe longitudinal (A) qui, dans un état de montage du dispositif de grue (10) sur la structure de tour (12), est incliné par rapport à la direction verticale (16) et s'étend pratiquement verticalement dans un état de fonctionnement du dispositif de grue (10) monté sur la structure de tour (12),
une flèche (18) fixée de manière pivotante à la tour de grue (14), qui est rabattue lorsque le dispositif de grue (10) est à l'état de montage,
un chariot de grue (20) qui, à l'état de montage du dispositif de grue (10) dépasse latéralement de la tour de grue (14) à la structure de tour (12) et présente des moyens de contact (22), avec lesquels le dispositif de grue (10) est supporté sur la structure de tour (12) et peut être déplacé verticalement le long de celle-ci, et
une suspension de grue (26) formée sur la tour de grue (14) pour monter un câble de grue (28) devant être supporté sur la structure de tour (12) pour le mouvement vertical du dispositif de grue (10), la suspension de grue (26) définissant un point d'application de force (P) pour le câble de grue (28), qui est disposé radialement entre le moyen de contact (22) et le centre de gravité (S) du dispositif de grue (10) en vue en plan vertical lorsque le dispositif de grue (10) est à l'état de montage,
la tour de grue (14) pouvant pivoter librement vers la structure de tour (12) par l'intermédiaire du chariot de grue (20) lorsque le dispositif de grue (10) est à l'état de montage.

2. Dispositif de grue selon la revendication 1, **caractérisé en ce que** le chariot de grue (20) présente deux moyens de contact (22) espacés dans la direction circonférentielle (24) pour l'appui sur la structure de tour (12), le point d'application de force (P) de la suspension de grue (26) étant disposé sensiblement au centre entre les deux moyens de contact (22) dans la direction circonférentielle (24).

3. Dispositif de grue selon les revendications 1 ou 2, **caractérisé en ce que** les moyens de contact (22) sont des roues de support qui peuvent rouler le long d'une surface de la structure de la tour (12).

4. Dispositif de grue selon l'une des revendications précédentes, **caractérisé en ce que** le chariot de grue (20), en particulier dans la zone des moyens de contact (22), comporte un dispositif de verrouillage (44) pour fixer le dispositif de grue (10) à la structure de la tour (12).

5. Dispositif de grue selon l'une des revendications précédentes, **caractérisé en ce que** la tour de grue (14) présente dans la direction axiale chariot de grue (20) qui, dans l'état de montage du dispositif de grue (10), est disposé sous le centre de gravité (S) du dispositif de grue (10) à une extrémité inférieure (30) de la tour de grue (14), en particulier avec exactement un chariot de grue, et/ou **caractérisé en ce que** la tour de grue (14) ne présente pas de chariot dans la zone de sa moitié supérieure, par rapport à l'état de montage.

6. Dispositif de grue selon l'une des revendications précédentes, **caractérisé en ce que** le chariot de grue (20) est un chariot unilatéral qui, à l'état de montage du dispositif de grue (10), n'exerce contre la moitié de la surface latérale de la tour (38) de la structure de la tour (12).

7. Dispositif de grue selon l'une des revendications précédentes, **caractérisé en ce que** le chariot de grue (20) est orientable.

8. Dispositif de grue selon l'une des revendications précédentes, **caractérisé en ce qu'**un dispositif de fixation (34) est prévu sur la tour de grue (14) pour fixer le dispositif de grue (10) à la structure de la tour (12), dans lequel dispositif de fixation (34) dépasse latéralement de la tour de grue (14).

9. Dispositif de grue selon la revendication 8, **caractérisé en ce que** la suspension de grue (26) est placée dans la direction axiale plus près du dispositif de fixation (34) que sur le chariot de grue (20).

10. Dispositif de grue selon l'une des revendications précédentes, **caractérisé en ce que** la tour de grue (14) dans l'état monté du dispositif de grue (10) comprend une section de tour inférieure (50) et une section de tour supérieure (52) adjacente à celle-ci, qui peut tourner par rapport à la section de tour inférieure (50) autour de l'axe longitudinal (A), la section de tour inférieure (50) ayant le chariot de grue (20), la suspension de grue (26) et un dispositif de fixation (34) pour fixer le dispositif de grue (10) à la structure de tour (12).

11. Dispositif de grue selon l'une des revendications précédentes, **caractérisé en ce qu'**il est prévu un bloc de charge (46) qui, à l'état de montage du dispositif de grue (10), est suspendu librement à un câble de charge (48).

12. Dispositif de grue selon l'une des revendications précédentes, **caractérisé en ce que** la suspension de grue (26) est montée de manière réglable sur la tour de grue (14) dans la direction longitudinale et/ou transversale de la tour de grue (14), en particulier par l'intermédiaire d'un cylindre télescopique pivotant.

13. Dispositif de grue selon l'une des revendications précédentes, **caractérisé en ce qu'**un dispositif de verrouillage (144) est prévu sur la tour de grue (14), qui maintient positivement la flèche (18) sur la tour de grue (14) en position repliée.

14. Dispositif de grue selon l'une des revendications précédentes, **caractérisé en ce que** la flèche (18) est une flèche (18) qui peut être étendue dans sa direction longitudinale, en particulier télescopique.

15. Procédé de montage temporaire d'un dispositif de grue mobile (10) conformément à l'une des exigences précédentes sur une construction de tour existante d'une éolienne (12), la construction de tour (12) comportant un treuil pilote (64) avec câble pilote (66) et, dans la région d'une tête de tour (62), un bras auxiliaire en porte-à-faux (68) saillant radialement, un bras principal (70) en saillie radialement et plusieurs paliers de grue (72), le procédé comprenant les étapes suivantes:
a) le dispositif de grue mobile (10) est transféré d'une condition de transport horizontal à une condition d'assemblage stationnaire sur la structure de tour (12) ;
b) un poulie pilote (74) avec une corde de pilote (76) est tirée vers le haut par le treuil pilote (64) sur la structure de la tour (12) ;
c) le poulie pilote (74) est fixée à une extrémité libre du cantilever auxiliaire (68) ;
d) un poulie de montage (78) avec un câble de grue (28) est soulevée par un treuil de montage (80) sur la structure de la tour (12) située au sol ;
e) le poulie de montage (78) est fixée à une extrémité libre du cantilever principal (70) ;
f) le dispositif de grue (10) est tiré vers le haut sur la structure de tour (12) par un treuil de grue (82), le dispositif de grue (10) étant supporté sur la structure de tour (12) par l'intermédiaire du chariot de grue (20) et le chariot de grue (20) roulant axialement le long d'une surface de la structure de tour (12) ; et
g) le dispositif de grue (10) est fixé aux paliers de grue (72) dans une position de montage final et transféré de l'état de montage à un état de fonctionnement.
